# FASCICULE DE BREVET EUROPEEN

(11) **EP 4 652 844 B1**
(45) Date de publication et mention de la délivrance du brevet: **12.08.2026**
(21) Numéro de dépôt: 24305812.0
(22) Date de dépôt: 24.05.2024
(51) Int. Cl.: A21C 3/02, A21C 3/04, A21C 11/16

(54) **DISPOSITIF DE FORMAGE DE PATES ALIMENTAIRES, INSTALLATION ET PROCEDE DE FABRICATION CORRESPONDANTS**
VORRICHTUNG ZUM FORMEN VON TEIGWAREN, ANLAGE UND VERFAHREN ZU DEREN HERSTELLUNG
DEVICE FOR FORMING PASTA, AND CORRESPONDING INSTALLATION AND METHOD FOR MAKING SAME

(43) Date de publication de la demande: 26.11.2025
(73) Titulaire: Lustucru Frais, 69008 Lyon (FR)
(72) Inventeur: DREUX, Vincent, 69110 SAINTE FOY LES LYON (FR)
(74) Mandataire: Cabinet Didier Martin

(56) Documents cités:
- WO-A1-2020/051611
- BE-A- 367 914
- JP-A- H09 172 938
- US-A- 2 712 798
- US-A- 3 326 144
- US-A- 5 516 011

## Description

La présente invention se rapporte au domaine général des produits alimentaires, et plus précisément au domaine technique des pâtes alimentaires.

La présente invention concerne en particulier un dispositif de formage de pâtes alimentaires destinées à être réchauffées et/ou cuites avant d'être consommées, ledit dispositif de formage comprenant :
- une cuve conçue pour contenir une composition pâteuse à partir de laquelle les pâtes alimentaires sont destinées à être formées, ladite cuve comprenant au moins des première et deuxième parois latérales qui se font face,
- des buses d'extrusion associées à ladite cuve pour être alimentées en composition pâteuse provenant de ladite cuve,
- un laminoir pour forcer la composition pâteuse contenue dans la cuve à travers lesdites buses d'extrusion, ledit laminoir comprenant au moins des premier et deuxième rouleaux de laminage qui s'étendent longitudinalement, selon respectivement un premier et un deuxième axe, entre lesdites première et deuxième parois latérales, à l'intérieur de la cuve.

L'invention concerne également une installation de fabrication de pâtes alimentaires destinées à être réchauffées et/ou cuites avant d'être consommées, qui inclut au moins un poste de fabrication d'une composition pâteuse à partir de laquelle lesdites pâtes alimentaires sont destinées à être fabriquées, ainsi qu'un dispositif de formage conforme à ce qui précède.

L'invention concerne enfin un procédé de fabrication de pâtes alimentaires destinées à être réchauffées et/ou cuites avant d'être consommées, ledit procédé de fabrication comprenant :
- la réception, dans une cuve, d'une composition pâteuse à partir de laquelle les pâtes alimentaires sont destinées à être formées, ladite cuve comprenant au moins des première et deuxième parois latérales qui se font face,
- le laminage de ladite composition pâteuse, au moyen d'un laminoir comprenant au moins des premier et deuxième rouleaux de laminage qui s'étendent longitudinalement, selon respectivement un premier et un deuxième axe, entre lesdites première et deuxième parois latérales, à l'intérieur de la cuve, pour forcer la composition pâteuse contenue dans la cuve à travers des buses d'extrusion associées à ladite cuve.

Les pâtes alimentaires sont des aliments particulièrement prisés des consommateurs, en particulier lorsqu'elles se présentent sous la forme de palets, boudins, ou encore boulettes, comme par exemple les tortellinis, les ravioles...

Ces produits alimentaires peuvent être fabriqués de manière artisanale, mais aussi et surtout de façon industrielle, afin en particulier de répondre à la demande importante des consommateurs.

Il est connu, afin de fabriquer industriellement des pâtes alimentaires, de mettre en œuvre des dispositifs de formage qui incluent une cuve dont l'une des parois communique avec des buses d'extrusion, ainsi que des rouleaux de laminage motorisés installés à l'intérieur de la cuve. Une composition pâteuse, à partir de laquelle les pâtes alimentaires sont destinées à être élaborées, est introduite dans la cuve, où elle subit un laminage par lesdits rouleaux qui forcent ainsi la composition pâteuse à travers les buses d'extrusion, pour former de façon continue des extrudats. Ces derniers sont découpés en pâtons en sortie des buses pour former lesdits palets, boudins ou boulettes.

Il est connu en particulier de recourir à trois rouleaux de laminage motorisés, avec deux rouleaux disposés l'un au-dessus de l'autre, et un troisième rouleau décalé par rapport aux deux autres, selon une disposition sensiblement en triangle.

Une telle installation classique donne globalement satisfaction, mais n'en présente pas moins des inconvénients sérieux.

En particulier, un inconvénient majeur concerne la difficulté d'assurer la maintenance, l'entretien et le nettoyage de l'ensemble formé par la cuve et les rouleaux de laminage motorisés. De telles opérations de maintenance, d'entretien et de nettoyage nécessitent en effet de pouvoir accéder aux différents espaces interstitiels ménagés entre les rouleaux. Cela nécessite généralement de démonter les parois de la cuve et de séparer les rouleaux de la cuve. Or de telles opérations de démontage s'avèrent en pratique complexes, fastidieuses et chronophages. Elles induisent en outre des risques pour le personnel chargé de ces opérations, compte tenu en particulier du poids et de l'encombrement conséquents des rouleaux de laminage, qui rendent leur manutention difficile.

US2712798 A divulgue un dispositif de formage de pâtes alimentaires et un procédé de fabrication de pâtes alimentaires selon l'art antérieur.

Les objets assignés à l'invention visent par conséquent à remédier aux différents inconvénients exposés dans ce qui précède, et à proposer un nouveau dispositif de formage de pâtes alimentaires dont la conception, tout en étant extrêmement simple et fiable, permet de réaliser des opérations de maintenance, d'entretien et de nettoyage de manière extrêmement rapide et facile, avec un risque d'accident corporel réduit et des coûts d'exploitation et de maintenance maîtrisées.

Un autre objet de l'invention vise à proposer un nouveau dispositif de formage de pâtes alimentaires de construction particulièrement compacte.

Un autre objet de l'invention vise à proposer un nouveau dispositif de formage de pâtes alimentaires de construction particulièrement robuste.

Un autre objet de l'invention vise à proposer un nouveau dispositif de formage de pâtes alimentaires qui est particulièrement facile à utiliser, et nécessite un minimum d'effort manuel.

Un autre objet de l'invention vise à proposer un nouveau dispositif de formage de pâtes alimentaires qui est particulièrement pratique et rapide à maintenir et à nettoyer.

Un autre objet de l'invention vise à proposer de nouveaux installation et procédé de fabrication de pâtes alimentaires qui permettent de fabriquer des pâtes alimentaires dans des conditions industrielles optimales, de façon particulièrement rapide, fiable et bon marché, avec une maintenance et des réglages facilités.

Les objets assignés à l'invention sont atteints à l'aide d'un dispositif de formage de pâtes alimentaires destinées à être réchauffées et/ou cuites avant d'être consommées, ledit dispositif de formage comprenant :
- une cuve conçue pour contenir une composition pâteuse à partir de laquelle les pâtes alimentaires sont destinées à être formées, ladite cuve comprenant au moins des première et deuxième parois latérales qui se font face,
- des buses d'extrusion associées à ladite cuve pour être alimentées en composition pâteuse provenant de ladite cuve,
- un laminoir pour forcer la composition pâteuse contenue dans la cuve à travers lesdites buses d'extrusion, ledit laminoir comprenant au moins des premier et deuxième rouleaux de laminage qui s'étendent longitudinalement, selon respectivement un premier et un deuxième axe, entre lesdites première et deuxième parois latérales, à l'intérieur de la cuve,
ledit dispositif de formage étant caractérisé en ce que lesdites première et deuxième parois latérales comprennent respectivement des première et deuxième portions avant de paroi latérale qui portent entre elles ledit premier rouleau de laminage auquel elles sont assemblées pour former avec lui un sous-ensemble avant, lesdites première et deuxième parois latérales comprenant également respectivement des première et deuxième portions arrière de paroi latérale qui portent entre elles ledit deuxième rouleau de laminage auquel elles sont assemblées pour former avec lui un sous-ensemble arrière, lesdits sous-ensembles avant et arrière étant mobiles l'un par rapport à l'autre pour permettre au dispositif de formage de passer d'une configuration fonctionnelle à au moins une configuration de maintenance par écartement relatif desdits sous-ensembles avant et arrière.

Les objets assignés à l'invention sont également atteints à l'aide d'une installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage selon l'invention.

Les objets assignés à l'invention sont enfin atteints à l'aide d'un procédé de fabrication de pâtes alimentaires destinées à être réchauffées et/ou cuites avant d'être consommées, ledit procédé de fabrication comprenant :
- la réception, dans une cuve, d'une composition pâteuse à partir de laquelle les pâtes alimentaires sont destinées à être formées, ladite cuve comprenant au moins des première et deuxième parois latérales qui se font face,
- le laminage de ladite composition pâteuse, au moyen d'un laminoir comprenant au moins des premier et deuxième rouleaux de laminage qui s'étendent longitudinalement, selon respectivement un premier et un deuxième axe, entre lesdites première et deuxième parois latérales, à l'intérieur de la cuve, pour forcer la composition pâteuse contenue dans la cuve à travers des buses d'extrusion associées à ladite cuve,
ledit procédé de fabrication étant caractérisé en ce que lesdites première et deuxième parois latérales comprennent respectivement des première et deuxième portions avant de paroi latérale qui portent entre elles ledit premier rouleau de laminage auquel elles sont assemblées pour former avec lui un sous-ensemble avant, lesdites première et deuxième parois latérales comprenant également respectivement des première et deuxième portions arrière de paroi latérale qui portent entre elles ledit deuxième rouleau de laminage auquel elles sont assemblées pour former avec lui un sous-ensemble arrière, ledit procédé de fabrication comprenant une étape de maintenance au cours de laquelle, après avoir arrêté le laminage, lesdits sous-ensembles avant et arrière sont écartés l'un de l'autre.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
La figure 1 illustre, selon une vue schématique en perspective avant, un détail de réalisation d'un dispositif de formage de pâtes alimentaires conforme à l'invention, en configuration fonctionnelle.
La figure 2 illustre, selon une vue schématique en perspective arrière de dessus, le détail de réalisation du dispositif de formage de la figure 1.
La figure 3 est une vue identique à celle de la figure 2, mais selon un point de vue opposé.
La figure 4 est une vue schématique en coupe transversale du détail de réalisation des figures 1 à 3.

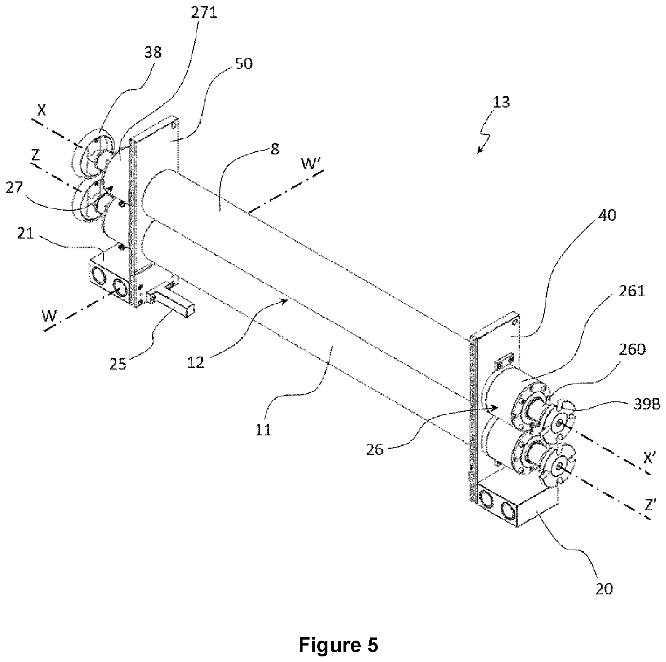

La figure 5 illustre, selon une vue schématique en perspective, un sous-ensemble avant qui fait partie du dispositif de formage illustré aux figures 1 à 4.

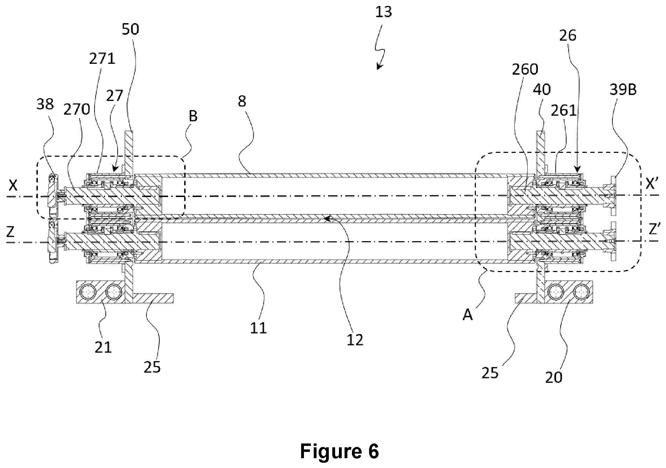

La figure 6 est une vue schématique en coupe longitudinale du sous-ensemble avant de la figure 5.

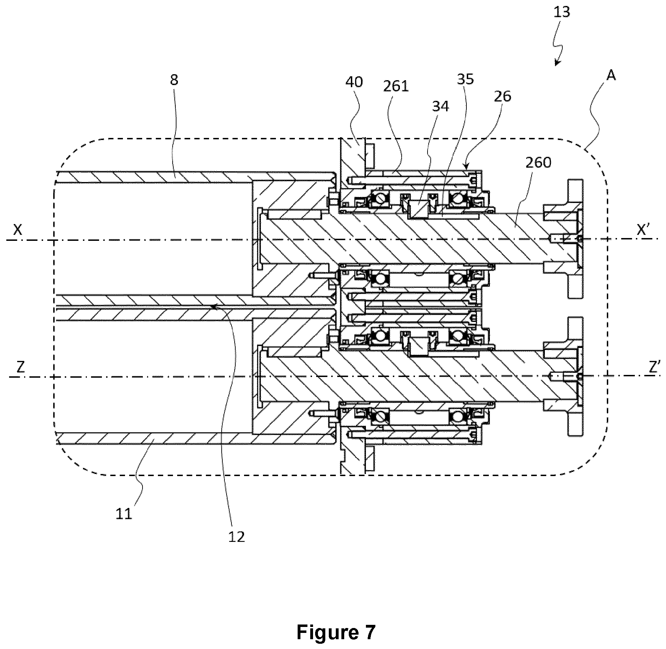

La figure 7 est une vue agrandie du détail référencé A de la figure 6.

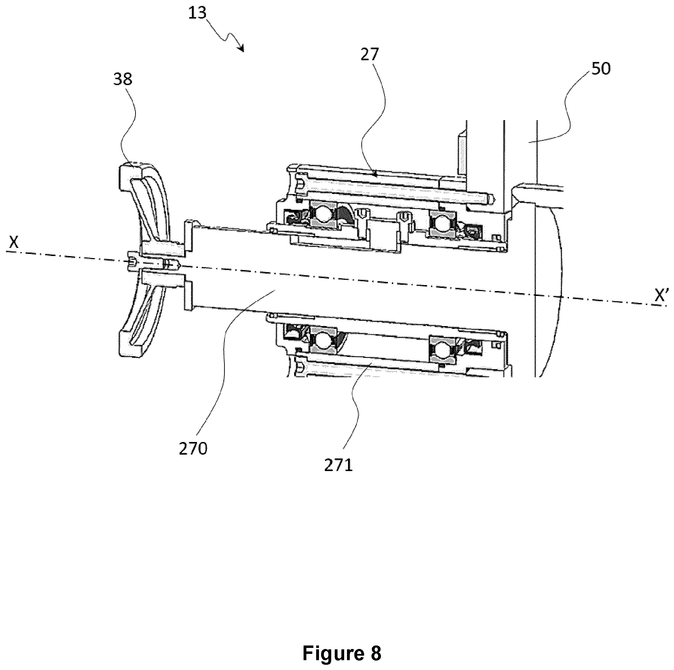

La figure 8 illustre, selon une vue schématique en coupe longitudinale, le détail référencé B de la figure 6, avec le premier rouleau de laminage et la première portion avant de paroi latérale dans une première position relative de butée.

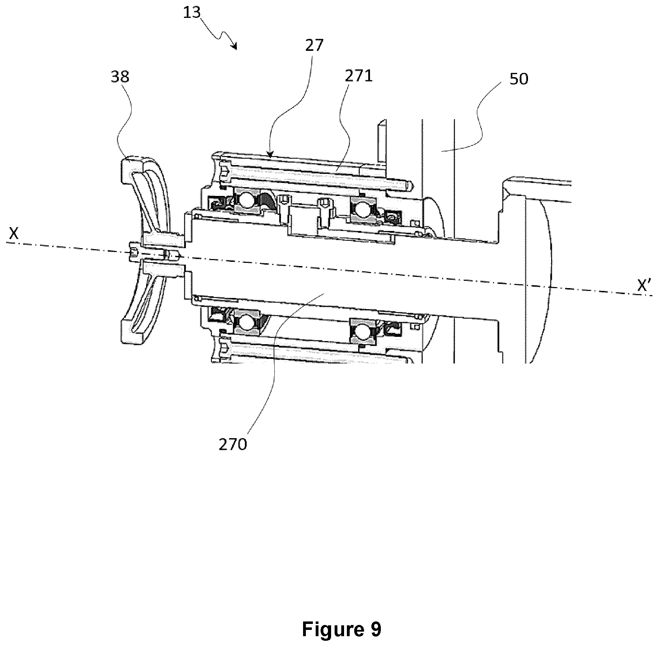

La figure 9 est une vue identique à celle de la figure 8, à la différence près que le premier rouleau de laminage et la première portion avant de paroi latérale se trouvent cette fois dans une deuxième position relative de butée, le passage de la configuration de la figure 8 à celle de la figure 9 s'effectuant par coulissement relatif du premier rouleau de laminage et de la première portion avant de paroi latérale.

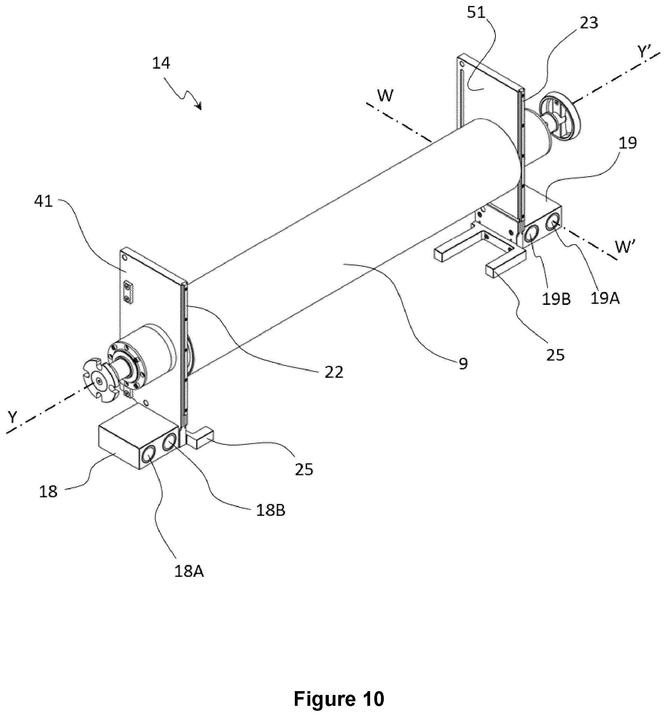

La figure 10 illustre, selon une vue schématique en perspective, un sous-ensemble arrière qui fait partie du dispositif de formage illustré aux figures précédentes.
La figure 11 illustre, selon une vue schématique en perspective, un sous-ensemble moto-réducteur qui fait partie du dispositif de formage illustré aux figures précédentes, et qui est destiné à mettre en rotation les rouleaux de laminage dont est pourvu ce dernier.
La figure 12 illustre, selon une vue schématique en perspective, un détail de réalisation du dispositif de formage des figures précédentes, dans une configuration débrayée dans laquelle le sous-ensemble moto-réducteur de la figure 11 est désaccouplé des rouleaux de laminage.
La figure 13 illustre, selon une vue schématique en perspective arrière de dessus, un détail de réalisation du dispositif de formage des figures précédentes, qui se trouve cette fois dans une configuration de maintenance.
La figure 14 est une vue de dessus du détail de réalisation de la figure 13.
La figure 15 est une vue de côté du détail de réalisation du dispositif de formage illustré aux figures 13 et 14.

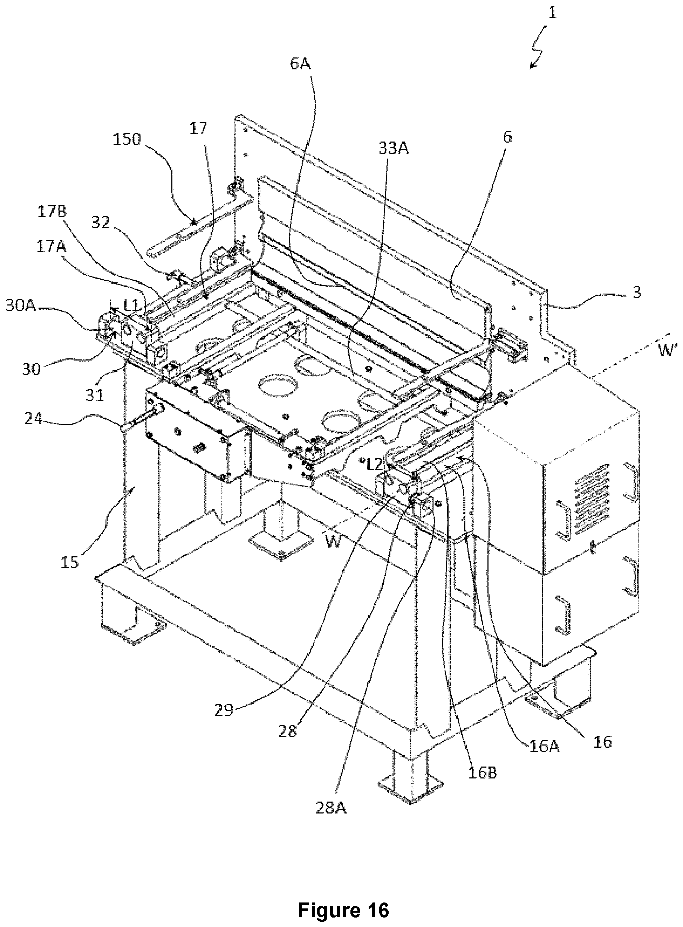

La figure 16 est analogue à la figure 13, à la différence principale près que le laminoir, ainsi que la plupart des parois de la cuve (en ce compris les première et deuxième parois latérales) ont été omises.

L'invention concerne un dispositif de formage 1 de pâtes alimentaires, qui est destiné à faire partie d'une installation de fabrication de pâtes alimentaires. Ladite installation de fabrication, qui constitue en tant que telle l'un des aspects de l'invention, est donc avantageusement une installation de pastification, pour fabriquer des pâtes alimentaires. L'installation de fabrication en question, qui inclut ledit dispositif de formage 1 selon l'invention, est avantageusement une installation de fabrication industrielle automatisée, conçue pour assurer de préférence une fabrication de pâtes en continu. De la même manière, le dispositif de formage 1 selon l'invention est lui-même un dispositif de formage industriel automatisé, conçu pour assurer de préférence un formage des pâtes alimentaires en continu.

Les pâtes alimentaires formées au moyen du dispositif de formage 1 selon l'invention, et fabriquées au moyen de l'installation de fabrication selon l'invention (laquelle inclut ledit dispositif de formage 1), sont destinées à être réchauffées et/ou cuites avant d'être consommées. Il s'agit donc de pâtes alimentaires qui ne sont pas prévues pour être consommées, mangées, en l'état, mais qui nécessitent au contraire une opération préalable de réchauffage et/ou de cuisson afin de développer pleinement leurs qualités organoleptiques. Les pâtes alimentaires en question peuvent être réchauffées ou cuites par immersion dans un liquide chaud, comme par exemple de l'eau portée à ébullition. Alternativement, elles peuvent être destinées à être réchauffées ou cuites à la poêle, c'est-à-dire être poêlées, en présence par exemple d'un corps gras (huile végétale, beurre...). Au sens de l'invention, le terme « *pâte alimentaire* » n'est pas limité à une définition légale ou normative, et concerne tout aliment obtenu à partir d'un mélange qui inclut au moins une farine et/ou une semoule de céréale et un liquide d'hydratation. Avantageusement, lesdites pâtes alimentaires fabriquées au moyen du dispositif 1 selon l'invention sont destinées à être conservées au réfrigérateur (par exemple à une température comprise entre 0°C et 4°C) avant cuisson et consommation, et sont destinées par exemple à être vendues au rayon « *frais* » des magasins. Lesdites pâtes alimentaires fabriquées au moyen du dispositif 1 selon l'invention sont avantageusement des pâtes farcies, comme par exemple des ravioles ou des tortellinis, c'est-à-dire qu'elles englobent un cœur de farce dont elles sont fourrées. Par exemple, la farce en question peut être une préparation comprenant du fromage ou une spécialité fromagère, et / ou une purée de légume(s) et / ou de la viande hachée, *etc.*

Lesdites pâtes alimentaires sont plus précisément destinées à être formées à partir d'une composition pâteuse. Cette dernière est avantageusement fabriquée par malaxage et cuisson d'un mélange formé à partir au moins d'une part d'une farine et/ou d'une semoule d'au moins une céréale contenant des protéines capables de former du gluten et d'autre part d'un liquide d'hydratation. À l'issue du malaxage et de la cuisson, de préférence simultanés, dudit mélange, est obtenue une substance molle, malléable, qui se présente sous la forme d'une masse cohésive, sensiblement homogène, présentant la consistance d'une pâte, avec en particulier une capacité d'écoulement. La mise en œuvre d'une céréale (ou d'un mélange de céréales) qui contient des protéines (typiquement des prolamines et des glutamines) capable de former du gluten confère à la composition pâteuse une certaine élasticité, laquelle contribue avantageusement notamment à une bonne tenue des pâtes alimentaires lors du réchauffage ou de la cuisson, et à l'obtention d'une texture relativement ferme et élastique des pâtes après réchauffage ou cuisson de ces dernières. De préférence, ladite céréale est du blé. Ladite farine de céréales avantageusement mise en œuvre pour obtenir la composition pâteuse est alors préférentiellement une farine de blé tendre, tandis que ladite semoule de céréales avantageusement mise en œuvre pour obtenir la composition pâteuse est préférentiellement une farine de blé dur. Bien évidemment, d'autres céréales peuvent être mises en œuvre, comme par exemple l'orge, l'épeautre, le seigle, ou encore l'avoine, cette liste n'étant pas limitative.

Le mélange à partir duquel est formé la composition pâteuse peut inclure en outre d'autres ingrédients en plus de la farine et/ou de la semoule de céréales et du liquide d'hydratation. Ces ingrédients complémentaires peuvent inclure par exemple des œufs, du lait, du gluten, des légumes ou extraits de légumes, ou encore des aromates, ou tout autre adjuvant.

Selon un mode de réalisation préférentiel particulier, le mélange à partir duquel est formé la composition pâteuse inclut avantageusement un féculent, comme par exemple du tubercule de *Solanum tuberosum.* Dans ce cas, le mélange en question comprend préférentiellement des flocons (préférentiellement déshydratés) et/ou de la poudre et/ou des granules de du tubercule de *Solanum tuberosum,* ou encore une purée de tubercule de *Solanum tuberosum* (préparation humide de tubercule de *Solanum tuberosum* écrasé), mélangés avec la farine et/ou la semoule de céréales et le liquide d'hydratation, pour former par exemple des produits en forme de boulettes ou boudins.

De préférence, le liquide d'hydratation est de l'eau, mais il peut alternativement s'agir d'un autre liquide, par exemple du lait ou un liquide d'origine végétale, ou tout autre liquide permettant, en étant dosé de manière appropriée, l'obtention d'une composition de consistance pâteuse. Le liquide d'hydratation peut éventuellement être déjà inclus, en tout ou partie, dans certains des autres ingrédients (par exemple dans de la purée de tubercule de *Solanum tuberosum*).

De préférence, lesdites pâtes alimentaires sont des pâtes fraîches avec un taux d'humidité qui est supérieur à 12 % en masse, de façon préférentielle supérieur à 20 % en masse, et de façon encore plus préférentielle supérieur à 30 % en masse.

Avantageusement, les pâtes alimentaires fabriquées au moyen du dispositif 1 de fabrication selon l'invention se présentent sous la forme de boulettes, boudins et/ou palets formés à partir de la composition pâteuse, et qui sont éventuellement farcis ou fourrés, comme évoqué précédemment, avec une farce qui peut être une préparation comprenant du fromage ou une spécialité fromagère, et / ou une purée de légume(s) et / ou de la viande hachée. Lesdites pâtes alimentaires forment par exemple des tortellinis ou des ravioles.

Par exemple, dans le cas où les pâtes alimentaires fabriquées au moyen du dispositif 1 sont sous forme de boulettes ou boudins, le mélange permettant d'obtenir la composition pâteuse est formé à partir au moins de :
- 15 % à 40 % en masse de farine et/ou de semoule de céréales ;
- 10 à 25 % en masse de flocons de tubercule de *Solanum tuberosum* déshydraté,
- 40 à 60 % en masse d'eau.

Ledit mélange est en revanche dépourvu d'agent levant (ou agent de levage), qu'il s'agisse d'un agent de levage chimique (poudre à lever ou levure chimique) ou naturelle (levure) de sorte que la composition pâteuse est avantageusement obtenue sans levage biologique (et donc sans fermentation) ou chimique.

Ladite installation de fabrication inclut ainsi au moins le dispositif de formage 1 selon l'invention, ainsi qu'au moins un poste de fabrication de ladite composition pâteuse à partir de laquelle lesdites pâtes alimentaires sont destinées à être fabriquées. Ledit poste de fabrication de la composition pâteuse inclut par exemple des moyens de malaxage et cuisson des ingrédients formant la composition pâteuse, et par exemple des moyens de malaxage et cuisson d'un mélange formé à partir d'au moins d'une farine et/ou d'une semoule d'au moins une céréale contenant des protéines capables de former du gluten et d'un liquide d'hydratation.

De préférence, ledit dispositif de formage 1 comprend une cuve conçue pour contenir ladite composition pâteuse à partir de laquelle les pâtes alimentaires sont destinées à être formées. Ladite cuve est donc capable de retenir en son sein la composition pâteuse, et en particulier de l'empêcher de s'écouler de façon incontrôlée en dehors de la cuve. La cuve forme ainsi avantageusement un réceptacle suffisamment étanche pour recevoir la composition pâteuse. Pour autant, le réceptacle en question peut présenter, comme illustré aux figures, une ouverture supérieure libre permettant d'amener la composition pâteuse dans la cuve, laquelle forme ainsi une enceinte de réception avantageusement ouverte sur l'extérieur au niveau de sa partie supérieure. La cuve forme ainsi un réceptacle qui permet de charger facilement une masse de composition pâteuse dans le dispositif de formage 1. La cuve est avantageusement réalisée en un matériau métallique, par exemple en acier inoxydable, pour à la fois résister aux contraintes mécaniques liées au processus de fabrication et limiter les risques en matière sanitaire et d'hygiène.

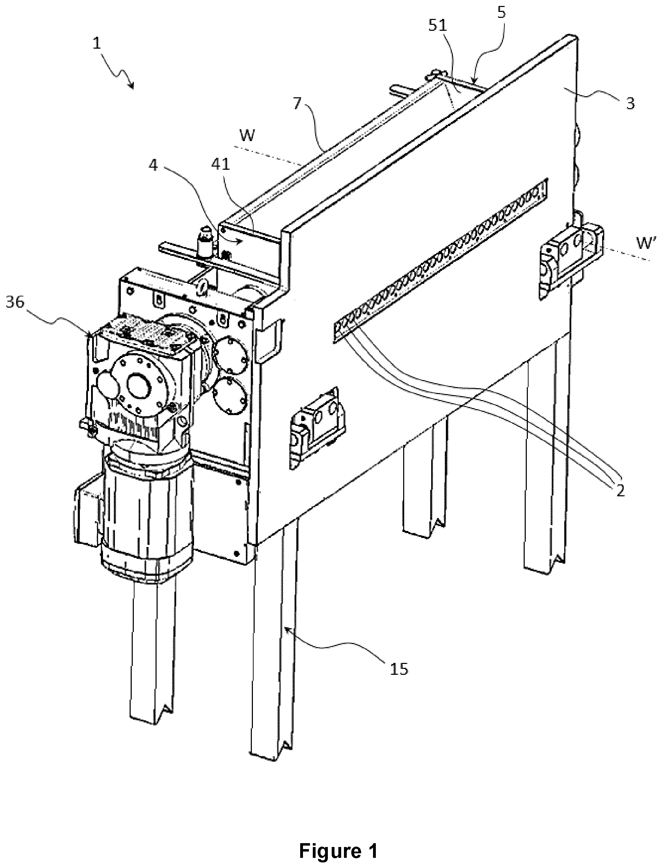

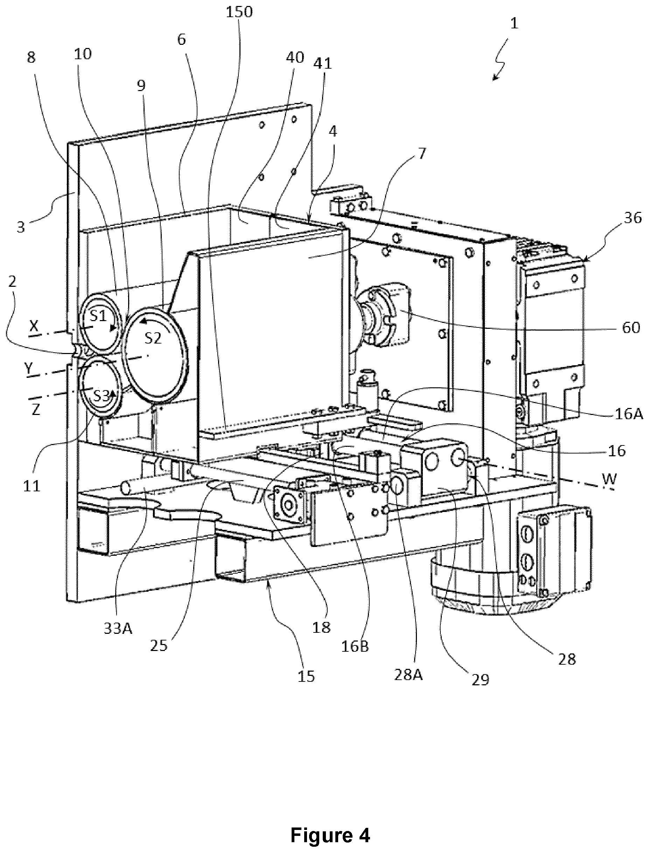

Comme illustré en particulier par les figures 1 et 4, le dispositif de formage 1 selon l'invention comprend des buses d'extrusion 2 par lesquelles est destinée à passer ladite composition pâteuse, pour former, en sortie desdites buses 2, des extrudats à partir desquels les pâtes alimentaires sont destinées à être formées. Lesdites buses d'extrusion 2 sont associées à la cuve précitée pour être alimentées en composition pâteuse provenant de ladite cuve. Ainsi, les buses d'extrusion 2 sont en communication fluidique avec l'intérieur de la cuve, pour permettre un écoulement de la composition pâteuse contenue dans la cuve par les buses d'extrusion 2, vers l'extérieur. Les buses d'extrusion 2 se présentent avantageusement, comme illustré aux figures, sous la forme d'orifices, par exemple de forme circulaire, ménagés à travers l'épaisseur d'une plaque 3 (par exemple métallique) qui forme une filière d'extrusion. Lesdites buses d'extrusion 2 sont avantageusement disposées en rang, les unes à côté et à distance des autres, comme illustré. Ledit rang de buses d'extrusion 2 est avantageusement rectiligne et horizontal, comme illustré aux figures. La composition pâteuse est avantageusement destinée à passer simultanément à travers toutes les buses d'extrusion 2, de façon continue, de sorte que des extrudats, sous forme de cordons continus de composition pâteuse, sortent desdites buses d'extrusion 2. De préférence, le dispositif de formage 1 comprend également des moyens de découpe (non illustré) desdits extrudats en sortie desdites buses d'extrusion 2, qui sont avantageusement conçus pour découper automatiquement les extrudats issus de chacune des buses d'extrusion 2 en portions élémentaires (ou pâtons), de façon cyclique, pour obtenir par exemple des boulettes, boudins et/ou palets de composition pâteuse.

Dans le cas où le dispositif de formage 1 est destiné à fabriquer des pâtes alimentaires farcies, ledit dispositif de formage 1 est avantageusement conçu pour associer la composition pâteuse avec une farce (ou garniture). Ladite association de la composition pâteuse et de la farce est effectuée par le dispositif 1 par exemple par co-extrusion de la composition pâteuse et de la farce, ce qui permet d'associer de manière rapide, simple et efficace la composition pâteuse et la farce, la composition pâteuse venant avantageusement envelopper la farce. Avantageusement, ladite co-extrusion correspond à un assemblage, une combinaison, de la composition pâteuse et de la farce par poussage conjoint de ces dernières au travers de filières ou buses d'extrusion. On obtient de la sorte avantageusement des boulettes, boudins et / ou palets farcis (ou fourrés), et par exemple des boudins cylindriques aux extrémités fermées et d'un poids unitaire préférentiellement compris entre 6 g et 12 g environ, farce incluse. Avantageusement, de tels boulettes, boudins et / ou palets peuvent être formés de 20 % à 50 % en masse de farce (par exemple, 30 % en masse) et de 50 % à 80 % en masse de composition pâteuse (par exemple, 70 % en masse). Des proportions différentes peuvent toutefois bien évidemment être mises en œuvre, selon notamment la nature de la composition pâteuse et / ou de la farce, ou encore selon le profil organoleptique et / ou nutritionnel recherché.

Conformément à l'invention, la cuve comprend au moins une première paroi latérale 4 et une deuxième paroi latérale 5 qui se font face, c'est-à-dire qui sont en regard et à distance l'une de l'autre, et s'étendent de préférence parallèlement l'une à l'autre, avantageusement parallèlement à un plan vertical. Avantageusement, la cuve comprend en outre une paroi frontale 6 et une paroi dorsale 7 opposées, qui s'étendent avantageusement sensiblement perpendiculairement auxdites première et deuxième parois latérales 4, 5, ces dernières étant reliées entre elles par lesdites parois frontale 6 et dorsale 7, comme illustré aux figures. Plus précisément, la paroi frontale 6 s'étend longitudinalement entre un premier bord frontal vertical et un deuxième bord frontal vertical, tandis que la paroi dorsale 7 s'étend quant à elle entre un premier bord dorsal vertical et un deuxième bord dorsal vertical. La première paroi latérale 4 est conçue pour s'étendre entre lesdits premiers bords verticaux frontal et dorsal, tandis que la deuxième paroi latérale 5 est conçue pour s'étendre entre lesdits deuxièmes bords verticaux dorsal et frontal. La cuve comprend également avantageusement un fond, qui forme avec lesdites première et deuxième parois latérales 4, 5, ainsi que lesdites parois frontale 6 et dorsale 7 un réceptacle ouvert dans sa partie supérieure, comme illustré aux figures. Le fond de la cuve peut être constitué de plusieurs pièces jointives, dont certaines sont par exemple solidaires de la paroi frontale 6 et/ou de la paroi dorsale 7. Avantageusement, la cuve comprend une lumière longiligne 6A qui est préférentiellement ménagée à travers la paroi frontale 6 de la cuve et est abouchée auxdites buses d'extrusion 2. En l'espèce, la plaque 3 qui forme avantageusement la filière d'extrusion est préférentiellement plaquée contre la paroi frontale 6, de sorte que les buses d'extrusion 2 sont mises en communication avec la lumière 6A. Cette dernière forme avantageusement une fente qui traverse toute l'épaisseur de la paroi frontale 6, pour mettre en communication l'intérieur de la cuve avec l'extérieur. La forme de la fente formant la lumière 6A est avantageusement conjuguée à celle du rang de buses d'extrusion 2. Par exemple, comme illustré aux figures, la lumière 6A se présente sous la forme d'une fente allongée rectiligne sensiblement horizontale, disposée au droit du rang de buses d'extrusion 2. Ladite lumière 6A longiligne peut présenter un caractère continu, par exemple sous la forme d'une fente continue comme illustré au figures, ou alternativement peut présenter un caractère discret, sous la forme par exemple d'une rangée d'orifices disposés les uns à côté des autres et mutuellement espacés.

Comme illustré aux figures, le dispositif de formage 1 comprend un laminoir pour forcer la composition pâteuse contenue dans la cuve à travers lesdites buses d'extrusion 2. À cette fin, le laminoir comprend au moins un premier rouleau de laminage 8, qui s'étend longitudinalement, selon un premier axe X-X', entre lesdites première et deuxième parois latérale 4, 5, à l'intérieur de la cuve. Comme illustré, le laminoir comprend en outre au moins un deuxième rouleau de laminage 9, qui s'étend longitudinalement, selon un deuxième axe Y-Y', entre lesdites première et deuxième parois latérale 4, 5, à l'intérieur de la cuve. De préférence, lesdits premier et deuxième axes X-X', Y-Y' sont parallèles entre eux, et s'étendent sensiblement perpendiculairement auxdites première et deuxième parois latérales 4, 5. Avantageusement, les premier et deuxième rouleaux de laminage 8, 9 sont rotatifs, et ils sont montés à rotation respectivement selon le premier axe X-X' et le deuxième axe Y-Y'. Avantageusement, lesdits premier et deuxième axes X-X', Y-Y' s'inscrivent dans des plans verticaux respectifs distincts et distants l'un de l'autre. Les premiers et deuxième rouleaux de laminage 8, 9 présentent de préférence chacun une surface latérale sensiblement cylindrique, réalisée par exemple en un matériau métallique. Lesdits premier et deuxième rouleaux de laminage 8, 9 sont avantageusement disposés en regard l'un de l'autre, pour ménager entre eux un premier espace interstitiel (premier entrefer 10) dans lequel est forcée la composition pâteuse sous l'effet des rotations simultanées desdits premier et deuxième rouleaux 8, 9, entraînant ainsi le laminage de la composition pâteuse entre lesdits premier et deuxième rouleaux 8, 9. Ainsi, lesdits premier et deuxième rouleaux 8, 9 sont adjacents, pour délimiter entre eux le premier entrefer 10, ce qui permet d'entraîner la composition pâteuse vers les buses d'extrusion 2, en vue de la forcer à travers ces dernières, tout en calibrant le débit de composition pâteuse sur toute la rangée des buses d'extrusion 2, afin d'assurer une alimentation uniforme et simultanée de ces dernières. Les premier et deuxième rouleaux de laminage 8, 9, qui s'étendent parallèlement l'un à l'autre de façon adjacente, contribuent ainsi à former le laminoir qui permet d'assurer le déplacement d'une quantité contrôlée et uniforme d'une composition pâteuse à travers toutes les buses d'extrusion 2. Afin d'assurer cette fonction de laminage, les premier et deuxième rouleaux de laminage 8, 9 tournent selon des premier et deuxième sens respectifs S1, S2 qui sont opposés, c'est-à-dire que les premier et deuxième rouleaux de laminage 8, 9 sont contrarotatifs.

Avantageusement, le laminoir comprend un troisième rouleau de laminage 11 qui s'étend longitudinalement, selon un troisième axe Z-Z', entre lesdites première et deuxième parois latérales 4, 5, à l'intérieur de la cuve. Le troisième axe Z-Z' est avantageusement parallèle audit premier axe X-X' et audit deuxième axe Y-Y'. Avantageusement, ledit troisième rouleau de laminage 11 est rotatif, et est monté mobile à rotation selon ledit troisième axe Z-Z'. Le troisième rouleau de laminage 11 est avantageusement disposé sous le premier rouleau de laminage 8, de sorte que lesdits premiers axe X-X' et troisième axe Z-Z' sont sensiblement parallèles et s'inscrivent par exemple tous deux dans un seul et même plan vertical. Avantageusement, le troisième rouleau 11 est plus proche du premier rouleau 8 que du deuxième rouleau 9, de sorte à ménager un espace interstitiel (deuxième entrefer 12) entre lesdits premier rouleau de laminage 8 et troisième rouleau de laminage 11, sensiblement au droit de la fente longiligne 6A et de la rangée de buses 2. Le troisième rouleau de laminage 11 tourne avantageusement selon le troisième axe Z-Z' dans un troisième sens S3 de rotation qui est préférentiellement opposé au premier sens S1 de rotation du premier rouleau de laminage 8. Ainsi, lesdits premier, deuxième et troisième rouleaux de laminage 8, 9, 11 sont avantageusement agencés pour ménager, dans une configuration fonctionnelle du dispositif de formage 1 permettant le formage de pâtes alimentaires, un premier entrefer 10 entre lesdits premier et deuxième rouleaux 8, 9, ainsi qu'un deuxième entrefer 12 entre lesdits premier et troisième rouleaux 8, 11, lesdits deuxième et troisième rouleaux 9, 11 étant corotatifs, tandis que lesdits premier et troisième rouleaux 8, 11 sont contrarotatifs, pour faire passer la composition pâteuse d'abord dans le premier entrefer 10 puis dans le deuxième entrefer 12, avant qu'elle ne s'échappe à travers les buses 2, hors de la cuve.

Conformément à l'invention, lesdites première et deuxième parois latérales 4, 5 comprennent respectivement des première et deuxième portions avant de paroi latérale 40, 50 qui portent entre elles ledit premier rouleau de laminage 8 auxquelles elles sont assemblées pour former avec lui un sous-ensemble avant 13. En d'autres termes, le premier rouleau de laminage 8 est interposé entre la première portion avant de paroi latérale 40 et la deuxième portion avant de paroi latérale 50, de sorte que le premier axe X-X' s'étend sensiblement perpendiculairement auxdites première et deuxième portions avant de paroi latérale 40, 50. Le premier rouleau de laminage 8 est attaché à chacune de ses extrémités auxdites première et deuxième portions avant de paroi latérale 40, 50, de sorte que ces dernières supportent le poids dudit premier rouleau de laminage 8, et assurent son guidage en rotation. Le premier rouleau de laminage 8 est ainsi monté à rotation par rapport aux première et deuxième portions avant de paroi latérale 40, 50, tout en étant solidaire de ces dernières pour former avec elles le sous-ensemble avant 13. Avantageusement, lesdites première et deuxième portions avant de paroi latérale 40, 50 portent entre elles ledit troisième rouleau de laminage 11 auxquelles elles sont assemblées pour qu'il fasse ainsi lui aussi partie dudit sous-ensemble avant 13. Ainsi, le premier sous-ensemble avant 13 inclut non seulement les première et deuxième portions avant de paroi latérale 40, 50, mais également le premier et le troisième rouleau de laminage 8, 11.

Les première et deuxième parois latérales 4, 5 comprennent également respectivement une première portion arrière de paroi latérale 41 et une deuxième portion arrière de paroi latérale 51 qui portent entre elles ledit deuxième rouleau de laminage 9 auquel elles sont assemblées pour former avec lui un sous-ensemble arrière 14. En d'autres termes, le deuxième rouleau de laminage 9 est interposé entre la première portion arrière de paroi latérale 41 et la deuxième portion arrière de paroi latérale 51, de sorte que le deuxième axe X-X' s'étend sensiblement perpendiculairement auxdites première et deuxième portions arrière de paroi latérale 41, 51. Le deuxième rouleau de laminage 9 est attaché à chacune de ses extrémités auxdites première et deuxième portions arrière de paroi latérale 41, 51, de sorte que ces dernières supportent le poids dudit deuxième rouleau de laminage 9, et assurent son guidage en rotation. Le deuxième rouleau de laminage 9 est ainsi monté à rotation par rapport aux première et deuxième portions arrière de paroi latérale 41, 51, tout en étant solidaire de ces dernières pour former avec elles le sous-ensemble arrière 14.

Conformément à l'invention, lesdits sous-ensembles avant 13 et arrière 14 sont mobiles l'un par rapport à l'autre pour permettre au dispositif de formage 1 de passer d'une configuration fonctionnelle à au moins une configuration de maintenance, par écartement relatif desdits sous-ensembles avant 13 et arrière 14. Avantageusement, le dispositif de formage 1 comprend un bâti 15 qui supporte au moins la cuve, les buses d'extrusion 2 et le laminoir. Le passage de la configuration fonctionnelle à ladite au moins une configuration de maintenance implique ainsi avantageusement un déplacement d'au moins l'un desdits sous-ensemble avant 13 et sous-ensemble arrière 14 par rapport audit bâti 15.

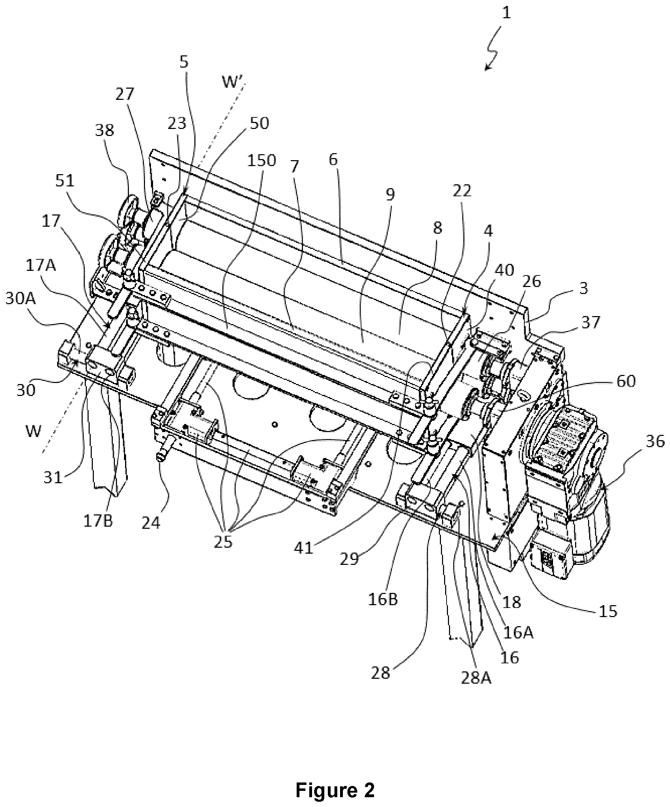

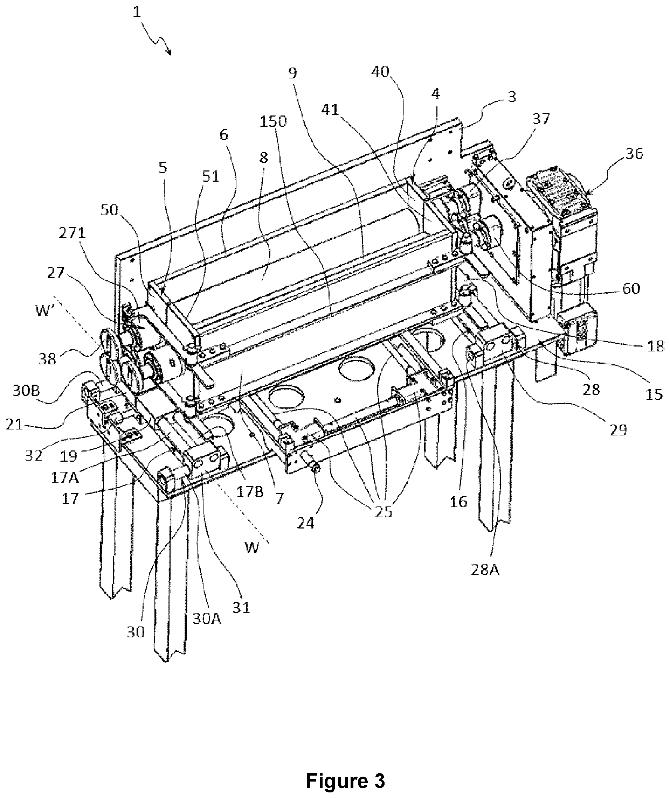

Ladite configuration fonctionnelle (illustrée en particulier aux figures 1 à 4), déjà évoquée précédemment, est une configuration du dispositif de formage 1 dans laquelle celui-ci est apte à former des pâtes alimentaires à partir de la composition pâteuse contenue dans la cuve. Cela signifie que dans la configuration fonctionnelle, la cuve est apte à contenir la composition pâteuse, tandis que le laminoir est apte à forcer la composition pâteuse contenue dans la cuve à travers les buses d'extrusion 2.

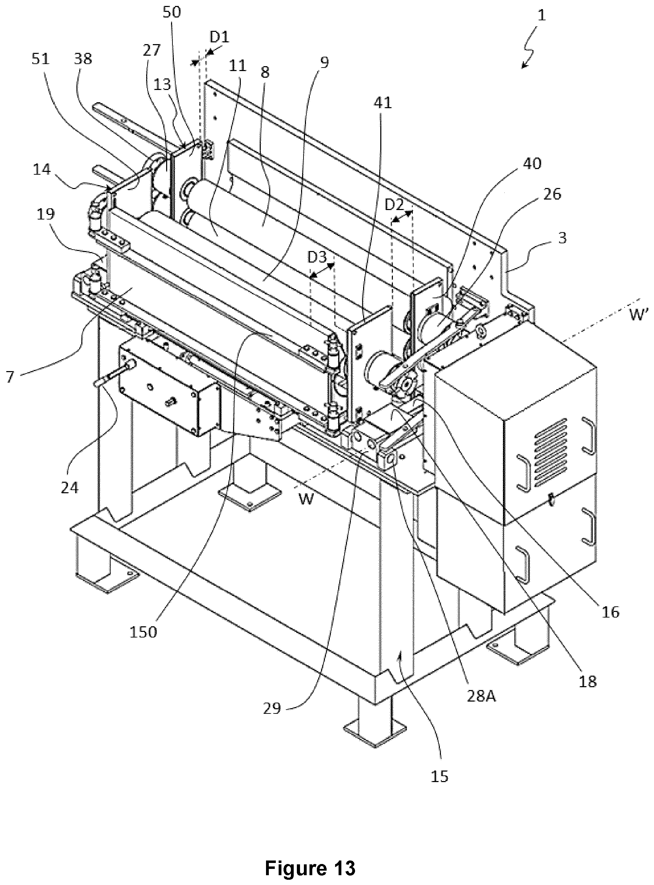

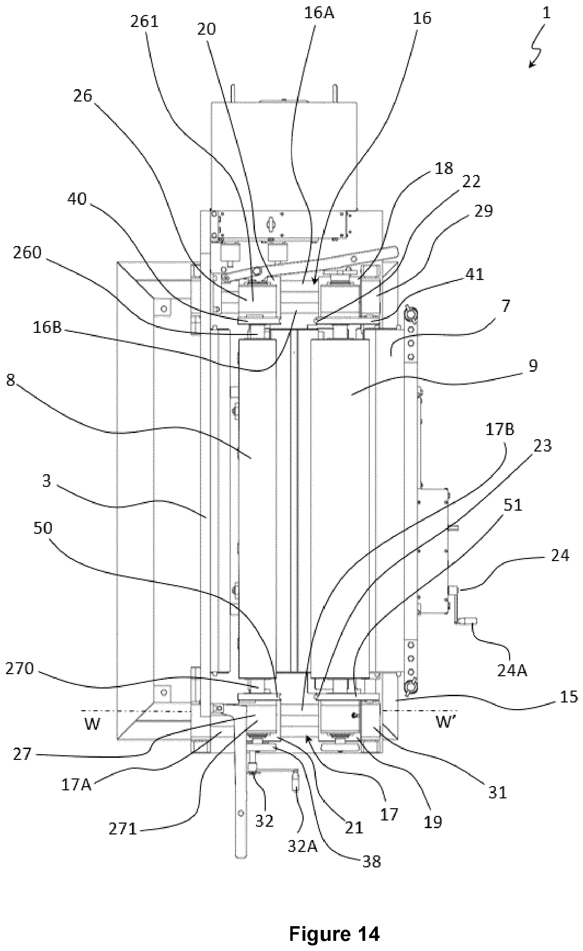

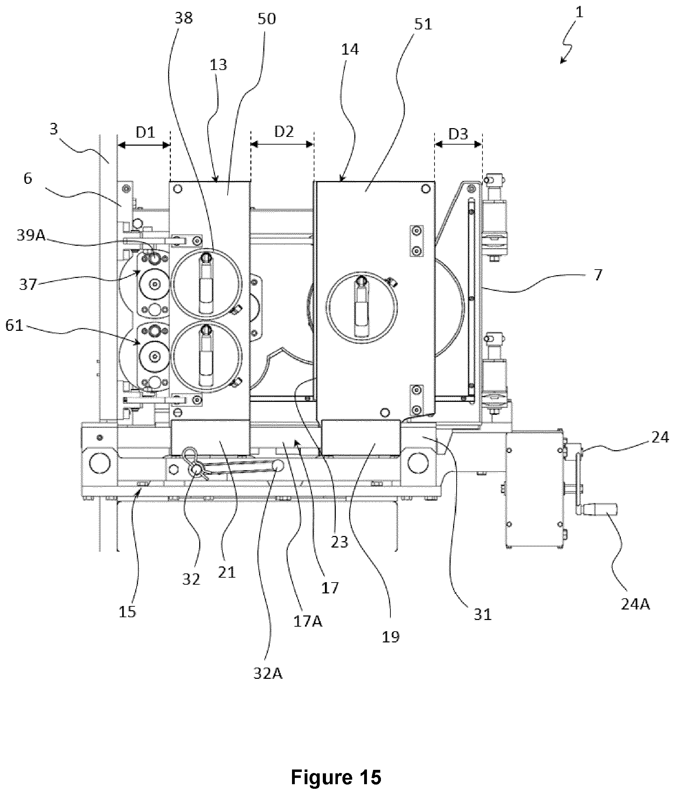

La (ou chaque) configuration de maintenance (cf. figures 13 à 15) est quant à elle une configuration destinée à faciliter l'accès à l'espace entre au moins le premier et le deuxième rouleau de laminage 8, 9, et de façon préférentielle de faciliter l'accès entre lesdits premier et deuxième rouleaux de laminage 8, 9, ainsi qu'entre lesdits premier et troisième rouleaux de laminage 8, 11, ainsi qu'entre lesdits deuxième et troisième rouleaux de laminage 9, 11, à des fins par exemple d'entretien, de maintenance et/ou de nettoyage. En configuration de maintenance, le dispositif de formage 1 n'est pas apte à former des pâtes alimentaires, notamment car la cuve 2 ne peut pas contenir la composition pâteuse et car le laminoir ne peut pas fonctionner puisqu'au moins le premier et le deuxième rouleau de laminage 8, 9 sont trop éloignés l'un de l'autre. Comme évoqué précédemment, le passage de la configuration fonctionnelle à ladite au moins une configuration de maintenance s'effectue en écartant ledit sous-ensemble arrière 14 dudit sous-ensemble avant 13, c'est-à-dire en impartissant un mouvement relatif auxdits sous-ensembles avant 13 et arrière 14 pour les éloigner l'un de l'autre, ce qui a pour conséquence en particulier d'éloigner le deuxième rouleau de laminage 9 dudit premier rouleau de laminage 8, permettant ainsi d'arriver à la configuration de maintenance à partir de la configuration fonctionnelle. Grâce à cette caractéristique technique, le passage de la configuration fonctionnelle à la configuration de maintenance ne nécessite pas d'opération complexe de démontage, et en particulier de démontage des premier et deuxième rouleaux de laminage 8, 9. Il suffit en effet de déplacer en bloc les sous-ensembles avant 13 et arrière 14 l'un par rapport à l'autre, sans pour autant avoir besoin de désassembler lesdits rouleaux de laminage 8, 9 des première et deuxième parois latérales 4, 5. Ceci permet de considérablement faciliter et sécuriser la maintenance, l'entretien et le nettoyage du dispositif de formage 1, en évitant en particulier les risques liés à la manutention des rouleaux de laminage 8, 9 et en réduisant le temps de passage de la configuration fonctionnelle à la configuration de maintenance puisqu'aucune opération complexe de démontage des rouleaux de laminage 8, 9 n'est requise.

Avantageusement, lesdites première et deuxième parois latérales 4, 5 sont conçues pour évoluer entre :
- d'une part une configuration fermée, correspondant à la configuration fonctionnelle du dispositif de formage 1, dans laquelle la première portion avant de paroi latérale 40 et la première portion arrière de paroi latérale 41 sont sensiblement jointives, et dans laquelle ladite deuxième portion avant de paroi latérale 50 et ladite deuxième portion arrière de paroi latérale 51 sont elles aussi sensiblement jointives,
- et d'autre part une configuration ouverte, correspondant à ladite configuration de maintenance du dispositif de formage 1, dans laquelle lesdites premières portions avant et arrière de paroi latérale 40, 41 sont écartées l'une de l'autre (c'est-à-dire qu'elles ne sont plus jointives mais distantes l'une de l'autre pour ménager entre elles un espace libre), et dans laquelle lesdites deuxième portions avant et arrière de paroi latérale 50, 51 sont elles aussi écartées l'une de l'autre, de sorte qu'elles ne sont plus jointives mais distantes l'une de l'autre pour ménager entre elles un espace libre.

Avantageusement, le dispositif de formage 1 comprend un système de verrouillage 150 de la cuve en configuration fonctionnelle. Le système 150 comprend par exemple un ensemble de barres de cerclage qui contraignent mécaniquement les première et deuxième portions avant de paroi latérale 40, 50, les première et deuxième portions arrière de paroi latérale 41, 51, la paroi dorsale 7 ainsi que la paroi frontale 6 plaquées par leurs bords latéraux respectifs les unes contre les autres, en configuration fermée.

Avantageusement, la première portion arrière de paroi latérale 41 est montée mobile en translation par rapport à ladite première portion avant de paroi latérale 40, tandis que la deuxième portion arrière de paroi latérale 51 est montée mobile en translation par rapport à ladite deuxième portion avant de paroi latérale 50, pour permettre le passage de l'une desdites configurations fermée et ouverte à l'autre, par translation desdites première et deuxième portions arrière de paroi latérale 41, 51 par rapport respectivement auxdites première et deuxième portions avant de paroi latérale 40, 50. De préférence, les première et deuxième portions arrière de paroi latérale 41, 51 sont montées mobiles en translation par rapport respectivement auxdites première et deuxième portions avant de paroi latérale 40, 50 selon une direction W-W' qui est sensiblement perpendiculaire auxdits premier et deuxième axes X-X', Y-Y'. Ainsi, le passage de la configuration fermée à la configuration ouverte (ou inversement) s'effectue par coulissement relatif simultané des première et deuxième portions arrière de paroi latérale 41, 51 par rapport respectivement aux première et deuxième portions avant de paroi latérale 40, 50, de telle sorte que la distance entre lesdites première portion arrière de paroi latérale 41 et première portion avant de paroi latérale 40, et la distance entre lesdites deuxième portion arrière de paroi latérale 51 et deuxième portion avant de paroi latérale 50, varient simultanément entre une même valeur nulle (configuration fermée) et une même valeur D2 non nulle (configuration ouverte), ladite valeur D2 non nulle étant avantageusement suffisante pour faciliter la maintenance, le nettoyage et/ou l'entretien du dispositif de formage 1. Avantageusement, et conformément au mode de réalisation illustré aux figures, la distance entre la première portion arrière de paroi latérale 41 et la première portion avant de paroi latérale 40 est en permanence identique à la distance entre la deuxième portion arrière de paroi latérale 51 et la deuxième portion avant de paroi latérale 50, c'est-à-dire que le déplacement en translation desdites première et deuxième portions arrière de paroi latérale 41, 51 par rapport respectivement auxdites première et deuxième portions avant de paroi latérale 40, 50 s'effectue de telle sorte que lesdits premier et deuxième axes X-X', Y-Y' restent en permanence parallèles l'un à l'autre.

De façon particulièrement avantageuse, conformément au mode de réalisation illustré aux figures, chacune desdites première et deuxième portion arrière de paroi latérale 41, 51 est montée mobile en translation par rapport au bâti 15. À cet effet, la première portion arrière de paroi latérale 41 est avantageusement reliée au bâti 15 par une liaison glissière. Cette dernière est formée avantageusement par :
- un premier rail 16 qui est solidaire du bâti 15, et qui inclut par exemple des tubes ou barres 16A, 16B qui s'étendent longitudinalement selon ladite direction W-W', parallèlement l'un à l'autre, et
- un premier coulisseau 18 qui est solidaire de la première portion arrière de paroi latérale 41, pour former avec cette dernière une unité monobloc.

Le premier coulisseau 18 est par exemple pourvu d'orifices 18A,18B qui reçoivent respectivement lesdits tubes ou barres 16A, 16B pour permettre ainsi au premier coulisseau 18 de coulisser le long dudit premier rail 16, selon la direction W-W', en étant par exemple enfilé sur ce dernier.

De la même façon, la deuxième portion arrière de paroi latérale 51 est avantageusement reliée au bâti 15 par une liaison glissière. Cette dernière est préférentiellement formée par :
- un deuxième rail 17 qui est solidaire du bâti 15, et qui inclut par exemple des tubes ou barres 17A, 17B qui s'étendent longitudinalement selon ladite direction W-W', parallèlement l'un à l'autre, et
- un deuxième coulisseau 19 qui est solidaire de la deuxième portion arrière de paroi latérale 51, pour former avec cette dernière une unité monobloc.

Le deuxième coulisseau 19 est par exemple pourvu d'orifices 19A,19B qui reçoivent respectivement lesdits tubes ou barres 17A, 17B pour permettre ainsi au deuxième coulisseau 19 de coulisser le long dudit deuxième rail 17, selon la direction W-W', en étant par exemple enfilé sur ce dernier.

Compte tenu de ce qui précède, les premier et deuxième rail 16, 17 sont avantageusement sensiblement parallèles l'un par rapport à l'autre, et s'étendent longitudinalement parallèlement à la direction W-W'.

Avantageusement, la première portion avant de paroi latérale 40 est reliée au bâti 15 par une liaison glissière, qui est préférentiellement formée par d'une part ledit premier rail 16, et d'autre part par un troisième coulisseau 20 qui est solidaire de ladite première portion avant de paroi latérale 40, pour former avec cette dernière une unité monobloc. Le troisième coulisseau 20 est avantageusement enfilé sur les tubes ou barres du premier rail 16 pour coulisser le long de ce dernier, selon la direction W-W'. De la même façon, la deuxième portion avant de paroi latérale 50 est avantageusement reliée au bâti 15 par une liaison glissière formée préférentiellement d'une part par le deuxième rail 17, et d'autre part par un quatrième coulisseau 21. Le quatrième coulisseau 21 est avantageusement solidaire de la deuxième portion avant de paroi latérale 50, pour former avec cette dernière une unité monobloc, qui coulisse le long du deuxième rail 17, selon la direction W-W'.

Ainsi, dans le mode de réalisation particulièrement avantageux illustré aux figures, chacune desdites première et deuxième portions avant de paroi latérale 40, 50, de même que chacune desdites première et deuxième portions arrière de paroi latérale 41, 51, est montée mobile en translation selon la direction W-W', par rapport au bâti 15, les mouvements respectifs des première et deuxième portions avant de paroi latérale 40, 50 par rapport au bâti 15 étant avantageusement synchronisés entre eux, de même que les mouvements respectifs des première et deuxième portions arrière de paroi latérale 41, 51, par rapport au bâti 15, de façon à maintenir en permanence le premier axe X-X' parallèle au deuxième axe Y-Y'.

Avantageusement, le dispositif de formage 1 comprend un premier joint d'étanchéité 22 conçu pour assurer une jonction étanche aux liquides entre lesdites première portion avant de paroi latérale 40 et première portion arrière de paroi latérale 41 lorsque celles-ci sont sensiblement jointives en configuration fermée, ainsi qu'un deuxième joint d'étanchéité 23 conçu pour assurer une jonction étanche aux liquides entre lesdites deuxièmes portions avant et arrière de paroi latérale 50, 51 lorsque celles-ci sont sensiblement jointives en configuration fermée. De préférence, le premier joint d'étanchéité 22 se présente sous la forme d'un jonc vertical, en matériau souple (matière plastique, élastomère ou caoutchouc par exemple), qui est capturé dans une gorge de profil en « C » qui s'étend le long d'un bord vertical de l'une ou l'autre des premières portions avant et arrière de paroi latérale 40, 41. Par exemple, le premier joint d'étanchéité 22 est solidaire de la première portion arrière de paroi latérale 41, et s'étend le long d'un bord vertical de cette dernière qui est destiné à venir se plaquer contre la première portion avant de paroi latérale 40 en configuration fermée. Une conception analogue est avantageusement retenue en ce qui concerne le deuxième joint d'étanchéité 23, qui se présente de préférence sous la forme d'un jonc en matériau souple identique au premier joint 22.

Ainsi, en configuration fermée (correspondant à la configuration fonctionnelle du dispositif de formage 1), la première portion avant de paroi latérale 40 forme avec la première portion arrière de paroi latérale 41 une première paroi latérale 4 unitaire monobloc, sensiblement étanche aux liquides ou du moins aux substances pâteuses. De même, en configuration fermée, correspondant la configuration fonctionnelle du dispositif de formage 1, la deuxième portion avant de paroi latérale 50 forme avec la deuxième portion arrière de paroi latérale 51 une deuxième paroi latérale 5 unitaire monobloc, sensiblement étanche aux liquides ou du moins aux substances pâteuses, de sorte que la cuve est en capacité d'accueillir et de retenir la composition pâteuse destinée à être forcée par le laminoir dans les buses d'extrusion 2.

Avantageusement, le dispositif de formage 1 comprend un premier organe de commande manuelle 24 mobile, par exemple en rotation. Le premier organe de commande manuelle 24 peut se présenter sous la forme d'une tige pourvue d'un embout auquel est destiné par exemple à être accouplé un moyen de manipulation, par exemple un volant ou une manivelle 24A. Le dispositif de formage 1 comprend également de préférence un premier organe de transformation de mouvement 25 qui est relié d'une part au premier organe de commande manuelle 24 et d'autre part auxdites première et deuxième portions arrière de paroi latérale 41, 51, pour convertir un déplacement (par exemple un déplacement en rotation), imparti manuellement, dudit premier organe de commande manuelle 24, en déplacements simultanés desdites première et deuxième portions arrière de paroi latérale 41, 51 par rapport respectivement auxdites première et deuxième portions avant de paroi latérale 40, 50. En d'autres termes, le déplacement, imparti manuellement, du premier organe de commande manuelle 24, est transformé par le premier organe de transformation de mouvement 25 en déplacement concomitant, de mêmes sens, direction et amplitude, des première et deuxième portions arrière de paroi latérale 41, 51 par rapport auxdites première et deuxième portions avant de paroi latérale 40, 50, et de préférence par rapport au bâti 15. À cette fin, le premier organe de transformation de mouvement 25 peut inclure par exemple des systèmes à vis sans fin, renvoi d'angle, fourchette, etc. qui permettent de transmettre aux première et deuxième portions arrière de paroi latérale 41, 51 le mouvement imparti manuellement au premier organe de commande manuelle 24, pour commander ainsi leur déplacement en translation selon la direction W-W'. Par exemple, dans le mode de réalisation illustré aux figures, le premier organe de transformation de mouvement 25 comprend des tiges rotatives qui entraînent en translation, par un système de vis sans fin, la paroi dorsale 7 de la cuve, laquelle paroi dorsale 7 est reliée mécaniquement, par exemple par un système de fourchette, aux première et deuxième portions arrière de paroi latérale 41, 51 pour entraîner ces dernières en translation selon la direction W-W'. Bien entendu, l'invention n'est pas limitée à un organe de transformation de mouvement particulier et tout dispositif de transformation de mouvement approprié, en particulier pour transformer un mouvement de rotation en mouvement de translation, pourra être mis en œuvre, sans pour autant que l'on sorte du cadre de l'invention.

Avantageusement, le premier organe de transformation de mouvement 25 est également relié aux première et deuxième portions avant de paroi latérale 40, 50 pour convertir un déplacement, imparti manuellement, dudit premier organe de commande manuelle 24, en déplacements simultanés, de préférence en translation selon la direction W-W', desdites première et deuxième portions avant de paroi latérale 40, 50 par rapport respectivement auxdites première et deuxième portions arrière de paroi latérale 41, 51, et de préférence par rapport au bâti 15. Dans ce cas, le premier organe de transformation de mouvement 25 comprend avantageusement des éléments de transmission mécanique portés par les première et deuxième portions avant de paroi latérale 40, 50, qui coopèrent par exemple avec des éléments complémentaires portés respectivement par les première et deuxième portions arrière de paroi latérale 41, 51, de façon à entrainer séquentiellement le déplacement en translation d'une part de la paire de première et deuxième portions avant de paroi latérale 40, 50, et d'autre part de la paire de première et deuxième portions arrière de paroi latérale 41, 51, en vue :
- avantageusement d'écarter le sous-ensemble avant 13 de la filière d'extrusion 3 d'une première distance D1, et d'écarter le sous-ensemble arrière 14 du sous-ensemble avant 13 d'une deuxième distance D2,
- et avantageusement d'écarter la paroi dorsale 7 du sous-ensemble arrière 14 d'une troisième distance D3.

Avantageusement, le dispositif de formage 1 comprend au moins un premier système d'assemblage 26 pour assembler la première portion avant de paroi latérale 40 audit premier rouleau de laminage 8, ledit premier système d'assemblage 26 établissant une liaison pivot glissant, selon ledit premier axe X-X', entre ledit premier rouleau de laminage 8 et ladite première portion avant de paroi latérale 40. Ainsi, le premier système d'assemblage 26 est conçu pour autoriser non seulement une rotation du premier rouleau de laminage 8 par rapport à la première portion avant de paroi latérale 40, mais également une translation selon le premier axe X-X' dudit premier rouleau de laminage 8 par rapport à la première portion avant de paroi latérale 40. Grâce à cette caractéristique, il est possible en particulier de décaler le premier rouleau de laminage 8, par exemple pour le désaccoupler du moteur qui le met en mouvement (comme cela sera expliqué plus en détail ci-après). L'établissement d'une liaison pivot glissant selon le premier axe X-X' entre le premier rouleau de laminage 8 et la première portion avant de paroi latérale 40 permet également de faciliter un mouvement latéral, parallèlement audit premier axe X-X', des première et deuxième parois latérales 4, 5, ce qui permet par exemple de les désengager des parois frontale 6 et/ou dorsale 7, pour permettre par exemple un mouvement subséquent de translation selon la direction W-W' comme exposé précédemment.

Avantageusement, le dispositif de formage 1 comprend au moins un deuxième système d'assemblage 27 pour assembler ladite deuxième portion avant de paroi latérale 50 audit premier rouleau de laminage 8, ledit deuxième système d'assemblage 27 établissant une liaison pivot glissant selon le premier axe X-X' entre ledit premier rouleau de laminage 8 et ladite deuxième portion avant de paroi latérale 50. Ainsi, le premier rouleau de laminage 8 peut avantageusement non seulement tourner selon le premier axe X-X' par rapport aux première et deuxième portions avant de paroi latérale 40, 50 qui le portent entre elles, mais il peut également coulisser, selon des courses respectives prédéterminées, par rapport à chacune desdites première et deuxième portions avant de paroi latérale 40, 50, selon ledit premier axe X-X'.

Avantageusement, la première portion avant de paroi latérale 40 est montée mobile à translation, selon ledit premier axe X-X', par rapport à ladite deuxième portion avant de paroi latérale 50, et de préférence par rapport audit bâti 15. À cette fin, la première portion avant de paroi latérale 40 est avantageusement reliée au bâti 15 par une liaison glissière d'axe X-X'. La liaison glissière en question est par exemple formée par :
- au moins un troisième rail 28, qui est de préférence solidaire du bâti 15, et qui inclut par exemple au moins un tube ou barre 28A, qui s'étend longitudinalement parallèlement au premier axe X-X', et
- au moins un cinquième coulisseau 29, qui est enfilé à coulissement sur la ou les tubes ou barres du troisième rail 28 pour pouvoir se déplacer à coulissement le long de ce dernier, parallèlement au premier axe X-X'.

Ledit cinquième coulisseau 29 porte avantageusement le premier rail 16, de sorte que le déplacement du cinquième coulisseau 29 le long du troisième rail 28, en translation selon une direction parallèle au premier axe X-X', entraîne le déplacement du premier rail 16 et donc du troisième coulisseau 20 en translation selon une direction parallèle au premier axe X-X'. Comme le troisième coulisseau 20 est attaché à la première portion avant de paroi latérale 40, cette dernière suit le déplacement dudit troisième coulisseau 20.

Avantageusement, ladite deuxième portion avant de paroi latérale 50 est montée mobile à translation selon ledit premier axe X-X' par rapport à ladite première portion avant de paroi latérale 40, et de préférence par rapport audit bâti 15. Avantageusement, la deuxième portion avant de paroi latérale 50 est reliée au bâti 15 par une liaison glissière, laquelle est préférentiellement formée par :
- au moins un quatrième rail 30 qui s'étend longitudinalement parallèlement au premier axe X-X', et donc parallèlement au troisième rail 28, ledit quatrième rail 30 étant de préférence solidaire du bâti 15 et incluant un ou plusieurs tubes 30A, 30B ;
- au moins un sixième coulisseau 31 qui est enfilé sur le quatrième rail 30, pour coulisser relativement à ce dernier, parallèlement au premier axe X-X'.

Avantageusement, la première course maximale en translation, parallèlement audit premier axe X-X', du sixième coulisseau 31 (et donc des deuxièmes portions avant et arrière de paroi latérale 50, 51), diffère de la deuxième course maximale du cinquième coulisseau 29 (et donc des premières portions avant et arrière de paroi latérale 40, 50). De préférence, ladite première course maximale est supérieure à ladite deuxième course maximale, ce qui signifie en pratique que le sixième coulisseau 31 peut se déplacer entre deux positions de butée séparées mutuellement d'une première distance L1, tandis que le cinquième coulisseau 29 peut se déplacer entre deux positions butées séparées par une deuxième distance L2, la première distance L1 étant préférentiellement supérieure à la deuxième distance L2, ce qui implique par exemple que la longueur du troisième rail 28 est plus petite que la longueur du quatrième rail 30, comme illustré aux figures. Grâce à cette caractéristique préférentielle, il est possible non seulement d'écarter latéralement l'une de l'autre lesdites première et deuxième parois latérales 4, 5, en les faisant coulisser chacune latéralement vers l'extérieur de la cuve, mais en outre, en combinaison avec les liaisons pivot glissant établies préférentiellement entre d'une part chacun des premier, deuxième et troisième rouleaux de laminage 8, 9, 11 et d'autre part respectivement les première et deuxième parois latérale 4, 5 qui les portent, d'assurer aisément un désaccouplement desdits rouleaux de laminage 8, 9, 11 des moyens moteurs conçus pour les mettre en rotation, comme cela sera expliqué plus en détail dans ce qui suit.

Avantageusement, le deuxième rouleau de laminage 9 est lui aussi relié à chacune des première et deuxième portion arrière de paroi latérale 41, 51 qui le portent entre elles par des liaisons pivot glissant. Un montage analogue est également mis en œuvre de préférence en ce qui concerne le troisième rouleau de laminage 11, qui est avantageusement relié par des liaisons pivot glissant à chacune des première et deuxième portions avant de paroi latérale 40, 50 qui le portent entre elles.

Avantageusement, le dispositif de formage 1 comprend un deuxième organe de commande manuelle 32 mobile, par exemple en rotation selon un axe de rotation avantageusement parallèle audit premier axe X-X'. Le deuxième organe de commande manuelle 32 peut se présenter sous la forme d'une tige pourvue d'un embout auquel est destiné par exemple à être accouplé un moyen de manipulation, par exemple un volant ou une manivelle 32A.

Le dispositif de formage 1 comprend avantageusement un deuxième organe de transformation de mouvement 33 qui est relié d'une part audit deuxième organe de commande manuelle 32 et d'autre part à ladite première portion avant de paroi latérale 40 pour convertir un déplacement, imparti manuellement, dudit deuxième organe de commande manuelle 32, en translation, selon ledit premier axe X-X', de ladite première portion avant de paroi latérale 40 par rapport à ladite deuxième portion avant de paroi latérale 50, et de préférence par rapport au bâti 15.

De préférence, le déplacement, imparti manuellement, du deuxième organe de commande manuelle 32, est transformé par le deuxième organe de transformation de mouvement 33 en déplacement concomitant de la première portion avant de paroi latérale 40, de préférence par rapport au bâti 15. À cette fin, le deuxième organe de transformation de mouvement 32 peut inclure par exemple des systèmes à vis sans fin, renvoi d'angle, fourchette, etc. qui permettent de transmettre à ladite première portion avant de paroi latérale 40 le mouvement imparti manuellement au deuxième organe de commande manuelle 32, pour commander ainsi son déplacement en translation selon le premier axe X-X'. Le deuxième organe de transformation de mouvement 33 comprend par exemple une tige rotative 33A montée mobile à rotation de préférence selon le même axe de rotation que celui du deuxième organe de commande manuelle 32 auquel elle est associée, et de préférence auquel elle est attachée par une liaison encastrement. La tige rotative 33A est préférentiellement pourvue d'une première portion de vis sans fin qui coopère avec une pièce complémentaire filetée solidaire de la première portion avant de paroi latérale 40, et par exemple fixé au cinquième coulisseau 29, pour commander le déplacement de ce dernier en translation selon une direction parallèle au premier axe X-X', et ainsi commander le déplacement en translation selon cette même direction de la première portion avant de paroi latérale 40 par rapport au bâti 15.

Avantageusement, le dispositif de formage 1 comprend un troisième organe de commande manuelle mobile, ainsi qu'un troisième organe de transformation de mouvement qui est relié d'une part audit troisième organe de commande manuelle et d'autre part à ladite deuxième portion avant de paroi latérale 50 pour convertir un déplacement, imparti manuellement, dudit troisième organe de commande manuelle, en translation, selon ledit premier axe X-X', de ladite deuxième portion avant de paroi latérale 50 par rapport à ladite première portion avant de paroi latérale 40, et de préférence par rapport au bâti 15. Avantageusement, ledit troisième organe de commande manuelle est formé par ledit deuxième organe de commande manuelle 32, de sorte que ce dernier est relié à la fois audit deuxième organe de transformation de mouvement 33 et audit troisième organe de transformation de mouvement, pour convertir un déplacement, imparti manuellement, dudit deuxième organe de commande manuelle 32 en translations simultanées desdites première et deuxième portions avant de paroi latérale 40, 50 selon ledit premier axe X-X', de préférence selon des sens respectifs opposés, afin soit d'écarter, soit de rapprocher, mutuellement, lesdites première et deuxième portions avant de paroi latérale 40, 50. De préférence, le troisième organe de transformation de mouvement comprend la tige rotative 33A, laquelle est avantageusement pourvue d'une deuxième portion de vis sans fin qui coopère avec une pièce complémentaire filetée solidaire du sixième coulisseau 31, pour assurer un déplacement en translation dudit sixième coulisseau 31 sous l'effet d'une rotation du deuxième organe de commande manuelle 32. Ainsi, le déplacement du deuxième organe de commande manuelle 32, par exemple en rotation selon un axe de rotation parallèle au premier axe X-X', entraîne de préférence simultanément la translation des cinquième et sixième coulisseaux 29, 31 selon une direction parallèle au premier axe X-X', en sens respectifs opposés.

Avantageusement, le premier système d'assemblage 26 inclut un premier tourillon 260 solidaire dudit premier rouleau de laminage 8, ainsi qu'un premier palier 261 solidaire de ladite première portion avant de paroi latérale 40. Ledit premier palier 261 reçoit ledit premier tourillon 260 pour permettre à ce dernier à la fois de coulisser et de tourner selon ledit premier axe X-X'. De préférence, le premier tourillon 260 traverse ladite première portion avant de paroi latérale 40 pour saillir à l'extérieur de la cuve, comme illustré aux figures. De la même façon, le deuxième système d'assemblage 27 inclut avantageusement un deuxième tourillon 270 solidaire dudit premier rouleau de laminage 8 ainsi qu'un deuxième palier 271 solidaire de ladite deuxième portion avant de paroi latérale 50. Ledit deuxième palier 271 reçoit ledit deuxième tourillon 270 pour permettre à ce dernier à la fois de coulisser et de tourner selon ledit premier axe X-X'. Ledit deuxième tourillon 270 traverse avantageusement ladite deuxième portion avant de paroi latérale 50 pour saillir à l'extérieur de la cuve, comme illustré aux figures.

Ainsi, dans ce mode de réalisation avantageux, le premier rouleau de laminage 8 est pourvu à chacune de ses extrémités respectivement du premier tourillon 260 et du deuxième tourillon 270 qui s'étendent de façon symétrique et opposée, sensiblement parallèlement au premier axe X-X'. Chacun desdits premier et deuxième tourillon 260, 270 se présente avantageusement sous la forme d'un axe cylindrique qui est inséré dans respectivement le premier palier 261 et le deuxième palier 271, chacun desdits premier et deuxième paliers 261, 271 étant préférentiellement pourvus de roulements à billes, pour faciliter la rotation de chaque tourillon 260, 270 selon le premier axe X-X'.

Avantageusement, le dispositif de formage 1 comprend un système d'entraînement qui est relié d'une part au premier rouleau 8 et d'autre part à au moins l'une desdites première et deuxième portions avant de paroi latérale 40,50, pour convertir un déplacement, imparti manuellement, de ladite au moins une desdites première et deuxième portions avant de paroi latérale 40, 50, en translation, selon ledit premier axe X-X', dudit premier rouleau de laminage 8. En d'autres termes, grâce audit système d'entraînement, le déplacement de la première portion avant de paroi latérale 40, en translation selon le premier axe X-X', peut entraîner le déplacement en translation selon ledit premier axe X-X' du premier rouleau de laminage 8. Alternativement ou additionnellement, le déplacement en translation selon le premier axe X-X' de la deuxième portion avant de paroi latérale 50 peut entraîner le déplacement en translation selon le premier axe X-X' du premier rouleau de laminage 8. Le système d'entraînement comprend par exemple un premier pion 34 qui est solidaire du premier palier 26 et une première gorge circonférentielle 35 ménagée localement à la surface du premier tourillon 260 et au sein de laquelle coulisse le premier pion 34 entre deux positions de butée correspondant aux bords extrêmaux de la gorge circonférentielle 35. Ainsi, le coulissement de la première portion avant de paroi latérale 40 selon le premier axe X-X' entraîne le coulissement concomitant du premier pion 34 dans la gorge circonférentielle 35, jusqu'à ce que ledit premier pion 34 vienne en butée contre l'un des bords extrêmaux de ladite gorge 35. À partir de ce moment, la poursuite du déplacement en translation de la première portion avant de paroi latérale 40 entraîne le déplacement en translation selon le premier axe X-X' du premier rouleau 8, sous l'effet de la poussée exercée par le premier pion 34 sur le premier tourillon 260, parallèlement au premier axe X-X'.

Avantageusement, des systèmes d'entraînement additionnels de conceptions similaires sont prévus entre :
- le premier rouleau 8 et la deuxième portion avant de paroi latérale 50,
- le deuxième rouleau 9 et au moins l'une desdites première et deuxième portions arrière de paroi latérale 41, 51 ;
- le troisième rouleau 11 et au moins l'une desdites première et deuxième portions avant de paroi latérale 40, 50.

De ce fait, il est possible de faire translater au moins l'un desdits premier, deuxième et troisième rouleaux de laminage 8, 9, 11 selon une direction qui est parallèle au premier axe X-X' par manipulation du deuxième organe de commande manuelle 32. En effet, le déplacement du deuxième organe de commande manuelle 32 (par exemple en rotation) entraîne le déplacement en translation parallèlement au premier axe X-X' des première et deuxième parois latérales 4, 5, qui elles-mêmes entraînent le déplacement en translation, parallèlement au premier axe X-X', des rouleaux de laminage 8, 9, 11.

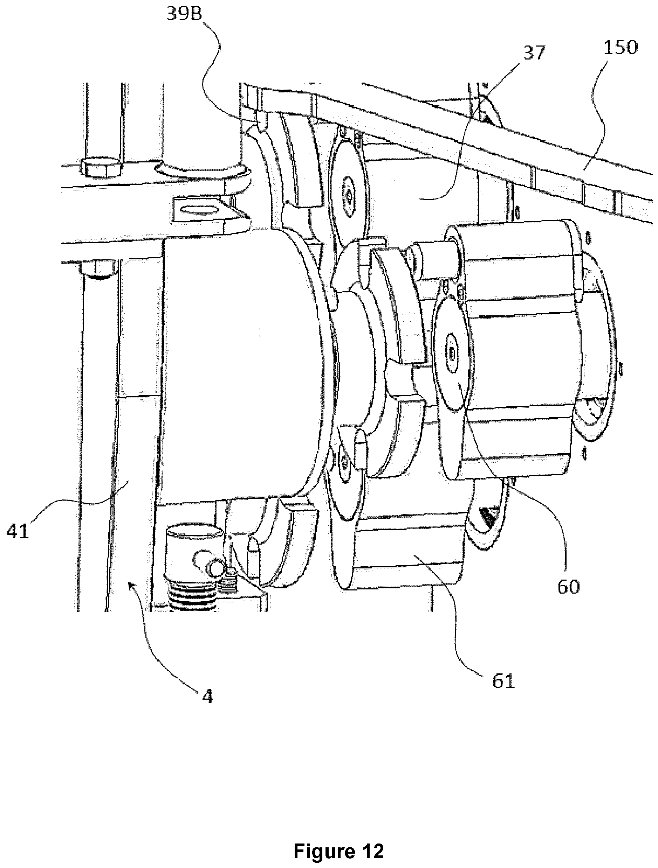

Avantageusement, le dispositif de formage 1 comprend un organe de motorisation 36 pourvu d'au moins un premier arbre de sortie rotatif 37 disposé à l'extérieur de la cuve. L'organe de motorisation 36 se présente par exemple sous la forme d'un groupe moto-réducteur, qui inclut un moteur électrique avec un arbre moteur relié à un système réducteur (par exemple à engrenages) interposé entre l'arbre moteur et ledit au moins un premier arbre de sortie rotatif 37, pour adapter la vitesse de rotation de ce dernier. Ledit premier arbre de sortie rotatif 37 est avantageusement conçu pour tourner selon un axe de rotation qui est parallèle audit premier axe X-X'. L'organe de motorisation 36 est avantageusement porté par le bâti 15, de préférence sur un côté de ce dernier, de façon à être disposé latéralement par rapport à la cuve, par exemple du côté de la première paroi latérale 4. Le dispositif de formage 1 comprend également avantageusement un mécanisme d'accouplement débrayable conçu pour évoluer entre d'une part une configuration embrayée (illustrée par exemple aux figures 1 à 4), dans laquelle ledit mécanisme d'accouplement débrayable accouple lesdits premier arbre de sortie 37 et premier tourillon 260 pour que la rotation dudit premier arbre de sortie 37 entraîne celle dudit premier tourillon 260, et d'autre part une configuration débrayée (cf. figure 12) dans laquelle lesdits premier arbre de sortie 37 et premier tourillon 260 sont désaccouplés, pour que la rotation dudit premier arbre de sortie 37 n'entraîne pas celle du premier tourillon 260.

Grâce à cette caractéristique avantageuse, il est possible de débrayer le premier rouleau de laminage 8, par exemple lorsque le dispositif de formage 1 se trouve en configuration de maintenance, ce qui permet avantageusement une manipulation manuelle du premier rouleau de laminage 8 pendant l'opération de maintenance, de nettoyage ou d'entretien. Ceci permet de limiter les risques d'accident, en empêchant physiquement, du fait du débrayage, toute mise en rotation motorisée intempestive du premier rouleau de laminage 8 lorsque le dispositif de formage 1 se trouve en configuration de maintenance.

Avantageusement, le dispositif de formage 1 comprend un quatrième organe de commande manuelle 38 disposé à l'extérieur de la cuve et relié audit deuxième tourillon 270 pour convertir un déplacement, imparti manuellement, dudit quatrième organe de commande manuelle 38, en rotation dudit premier rouleau de laminage 8 selon ledit premier axe X-X'. Le quatrième organe de commande manuelle 38 se présente par exemple sous la forme d'un volant qui est disposé à l'extrémité libre du deuxième tourillon 270, comme illustré aux figures, et est fixé audit deuxième tourillon 270 pour pouvoir l'entraîner, de préférence directement, en rotation selon le premier axe X-X'. Grâce à cette caractéristique avantageuse, il est possible de mettre en rotation de façon manuelle le premier rouleau 8, par exemple en configuration de maintenance, alors que le mécanisme d'accouplement débrayable se trouve avantageusement en configuration débrayée. Cela permet de faciliter les opérations d'entretien, de maintenance et de nettoyage, en minimisant les risques pour les opérateurs chargés de ces tâches.

Avantageusement, ledit mécanisme d'accouplement débrayable comprend au moins une conformation mâle 39A qui est solidaire de l'un desdits premier arbre de sortie 37 et premier tourillon 260. Ladite conformation mâle 39 inclut par exemple un doigt excentrique porté par le premier arbre de sortie 37, comme illustré aux figures. Le mécanisme d'accouplement débrayable comprend également une conformation femelle 39B qui est solidaire de l'autre desdits premier arbre de sortie 37 et premier tourillon 260 et présente une forme sensiblement complémentaire de celle de ladite conformation mâle 39A. La conformation femelle 39B inclut par exemple une encoche ménagée en périphérie d'un disque solidaire de l'extrémité libre du premier tourillon 260. En configuration embrayée, ladite conformation mâle 39A est engagée dans ladite conformation femelle 39B, pour réaliser ainsi un accouplement permettant l'entraînement en rotation du premier rouleau de laminage 8 par l'organe de motorisation 36, tandis qu'en configuration débrayée, la conformation mâle 39A est dégagée hors de la conformation femelle 39B, de sorte que la liaison mécanique entre le premier arbre de sortie 37 et le premier rouleau de laminage 8 est supprimée.

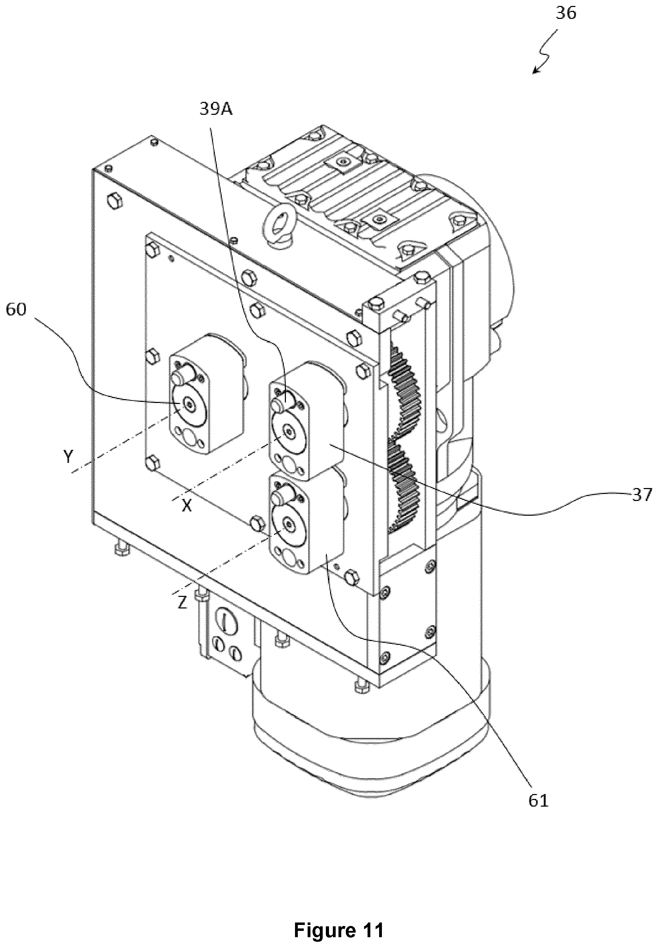

Afin de faciliter le passage de la configuration débrayée à la configuration embrayée, le doigt qui forme de préférence la conformation mâle 39A est avantageusement monté mobile axialement entre une position rétractée et une position déployée (visible sur la figure 11) qui est une position de rappel élastique, sous l'effet d'un ressort de rappel. Ceci permet au doigt de s'effacer au contact du disque qui porte avantageusement la conformation femelle 39B, jusqu'à ce que ledit doigt vienne en correspondance avec la conformation femelle 39B qui autorise alors son rappel élastique, et ainsi la capture de la conformation mâle 39A dans la conformation femelle 39B.

Le mécanisme d'accouplement débrayable constitue ainsi avantageusement un système de crabotage, qui permet de passer aisément de la configuration débrayée à la configuration embrayée et inversement, par simple déplacement relatif.

Avantageusement, le passage de l'une desdites configuration embrayée et débrayée à l'autre s'effectue par coulissement dudit premier rouleau de laminage 8 selon ledit premier axe X-X'. Il suffit ainsi d'assurer une translation dudit premier rouleau laminage 8 selon le premier axe X-X', par exemple selon les modalités exposées dans ce qui précède, pour que la conformation femelle 39B, qui est avantageusement portée par le premier tourillon 260, vienne engager la conformation mâle 39A, ou au contraire se dégager de cette dernière.

De préférence, l'organe de motorisation 36 est pourvu d'un troisième arbre de sortie rotatif 60 et d'un troisième arbre de sortie 61 pour mettre en rotation respectivement le deuxième rouleau de laminage 9 et le troisième rouleau de laminage 11, de préférence via des mécanismes d'accouplement débrayables analogues à celui qui vient d'être décrit en ce qui concerne le premier rouleau de laminage 8.

Un fonctionnement possible du dispositif de formage 1 peut être le suivant.

Le dispositif de formage 1 se trouve tout d'abord en configuration fonctionnelle, comme illustré aux figures 1 à 4. Afin de procéder à une opération de maintenance, nettoyage ou entretien, le système de verrouillage 150 est déverrouillé afin d'autoriser la dislocation contrôlée de la cuve.

Une fois le déverrouillage de la cuve effectué, un opérateur actionne manuellement le deuxième organe de commande manuelle 32, par exemple à l'aide de la manivelle 32A. Ceci entraîne la translation des première et deuxième parois latérales 4, 5 par rapport au bâti 15 selon une direction parallèle au premier axe X-X', de telle sorte que lesdites première et deuxième parois latérales 4, 5 s'écartent l'une de l'autre, afin d'une part de se dégager des parois frontale 6 et dorsale 7, et d'autre part d'entraîner le déplacement en translation selon le premier axe X-X' des premier, deuxième et troisième rouleaux de laminage 8, 9, 11 pour faire passer les mécanismes d'accouplement débrayables qui les relient respectivement à l'organe de motorisation 36 en configuration débrayée.

L'utilisateur actionne ensuite le premier organe de commande manuelle 24, par exemple à l'aide de la manivelle 24A, ce qui a pour effet d'entraîner avantageusement la translation de la paroi dorsale 7, selon une direction sensiblement perpendiculaire au premier axe X-X', de façon à la fois que ladite paroi dorsale 7 s'écarte de la paroi frontale 6 et entraîne l'écartement relatif des première et deuxième portions avant de paroi latérale 40, 50 par rapport respectivement aux première et deuxième portions arrière de paroi latérale 41, 51, afin d'atteindre la configuration de maintenance, dans laquelle le deuxième rouleau de laminage 9 est plus écarté des premier et troisième rouleaux de laminage 8, 11 qu'il ne l'était initialement en configuration fonctionnelle.

L'opération de maintenance, entretien ou nettoyage peut alors avoir lieu, sans qu'il n'y ait eu besoin pour cela de séparer les rouleaux de laminage 8, 9, 11 des parois latérales 4, 5 de la cuve.

L'invention concerne également un procédé de fabrication de pâtes alimentaires destinées à être réchauffées et/ou cuites avant d'être consommées.

Ledit procédé selon l'invention est donc un procédé de pastification, pour fabriquer des pâtes alimentaires destinées à être réchauffées et/ou cuites avant d'être consommées.

Le procédé en question peut être mis en œuvre, conformément à un mode de réalisation préférentiel, au moyen de l'installation de fabrication avec son dispositif de formage 1 décrit ci-avant. Dès lors, l'ensemble de la description qui précède concernant le dispositif 1 s'applique au procédé selon l'invention, et réciproquement la description qui suit relative au procédé selon l'invention s'applique au dispositif de formage 1 précité. Il est ceci étant parfaitement envisageable que le procédé de fabrication selon l'invention soit mis en œuvre au moyen d'un dispositif de formage qui diffère de celui décrit ci-avant. Dans ce qui suit, par souci de concision, le procédé décrit correspond à celui mis en œuvre par le dispositif de formage 1 selon l'invention.

Le procédé en question comprend préférentiellement la réception, dans une cuve, de la composition pâteuse à partir de laquelle les pâtes alimentaires sont destinées à être formées. Ladite composition pâteuse est avantageusement conforme à la description qui précède, de même que ladite cuve qui comprend au moins des première et deuxième parois latérales 4, 5 qui se font face.

Avantageusement, le procédé de fabrication selon l'invention comprend une étape préalable de fabrication de ladite composition pâteuse par malaxage et cuisson d'un mélange formé à partir d'au moins une farine et/ou d'une semoule d'au moins une céréale contenant des protéines capables de former du gluten d'une part et d'un liquide d'hydratation d'autre part. Avantageusement, ledit mélange inclut en outre des ingrédients supplémentaires, comme par exemple des flocons de tubercule de *Solanum tuberosum* déshydraté, et/ou des additifs ou adjuvants divers (œufs, etc.), comme déjà exposé dans ce qui précède en relation avec le dispositif de formage 1.

Le procédé selon l'invention comprend en outre le laminage de la composition pâteuse, au moyen d'un laminoir comprenant au moins des premier et deuxième rouleaux de laminage 8, 9 qui s'étendent longitudinalement, selon respectivement un premier et un deuxième axe X-X', Y-Y', entre lesdites première et deuxième parois latérales 4, 5, à l'intérieur de la cuve, pour forcer la composition pâteuse contenue dans la cuve à travers des buses d'extrusion 2 associées à ladite cuve, et communiquant avantageusement avec l'intérieur de cette dernière. Le laminage effectué au moyen du laminoir permet ainsi de pousser la composition pâteuse à travers les buses d'extrusion 2, pour former en sortie de ces dernières des extrudats, lesquels extrudats sont destinés à être découpés automatiquement, au moyen d'un outil de découpe cyclique (non illustré).

Comme évoqué dans ce qui précède, les première et deuxième parois latérales 4, 5 de la cuve comprennent respectivement des première et deuxième portions avant de paroi latérale 40, 50 qui portent entre elles ledit premier rouleau de laminage 8 auxquelles elles sont assemblées pour former avec lui un sous-ensemble avant 13, lesdites première et deuxième parois latérales 4, 5 comprenant également respectivement des première et deuxième portions arrière de paroi latérale 41, 51 qui portent entre elles le deuxième rouleau de laminage 9 auxquelles elles sont assemblées pour former avec lui un sous-ensemble arrière 14. La description qui précède relative au dispositif de formage 1 s'applique ici, *mutatis mutandis,* en ce qui concerne le procédé de fabrication.

Ledit procédé comprend en outre une étape de maintenance, au cours de laquelle, après avoir arrêté le laminage, lesdits sous-ensembles avant et arrière 13, 14 sont écartés l'un de l'autre, afin de ménager un accès suffisant entre le premier rouleau de laminage 8 et le deuxième rouleau de laminage 9 pour permettre des opérations de maintenance, nettoyage et/ou entretien. Par exemple, lesdits sous-ensembles avant et arrière 13, 14 sont écartés d'une distance comprise entre 30 et 200 cm, de façon encore plus préférentielle entre 50 et 150 cm. L'invention permet ainsi d'optimiser de manière particulièrement simple, rapide et efficace l'étape de maintenance, grâce en particulier au fait qu'il n'est pas nécessaire de séparer les rouleaux de laminage 8, 9 des parois latérales 4, 5.

## Revendications

1. Dispositif de formage (1) de pâtes alimentaires destinées à être réchauffées et/ou cuites avant d'être consommées, ledit dispositif de formage (1) comprenant :
- une cuve conçue pour contenir une composition pâteuse à partir de laquelle les pâtes alimentaires sont destinées à être formées, ladite cuve comprenant au moins des première et deuxième parois latérales (4, 5) qui se font face,
- des buses d'extrusion (2) associées à ladite cuve pour être alimentées en composition pâteuse provenant de ladite cuve,
- un laminoir pour forcer la composition pâteuse contenue dans la cuve à travers lesdites buses d'extrusion (2), ledit laminoir comprenant au moins des premier et deuxième rouleaux de laminage (8, 9) qui s'étendent longitudinalement, selon respectivement un premier et un deuxième axe (X, X', Y-Y'), entre lesdites première et deuxième parois latérales (4, 5), à l'intérieur de la cuve,
ledit dispositif de formage (1) étant **caractérisé en ce que** lesdites première et deuxième parois latérales (4, 5) comprennent respectivement des première et deuxième portions avant de paroi latérale (40, 50) qui portent entre elles ledit premier rouleau de laminage (8) auquel elles sont assemblées pour former avec lui un sous-ensemble avant (13), lesdites première et deuxième parois latérales (4, 5) comprenant également respectivement des première et deuxième portions arrière de paroi latérale (41, 51) qui portent entre elles ledit deuxième rouleau de laminage (9) auquel elles sont assemblées pour former avec lui un sous-ensemble arrière (14), lesdits sous-ensembles avant (13) et arrière (14) étant mobiles l'un par rapport à l'autre pour permettre au dispositif de formage (1) de passer d'une configuration fonctionnelle à au moins une configuration de maintenance par écartement relatif desdits sous-ensembles avant (13) et arrière (14).

2. Dispositif de formage (1) selon la revendication précédente, **caractérisé en ce que** lesdites première et deuxième parois latérales (4, 5) sont conçues pour évoluer entre d'une part une configuration fermée, correspondant à la configuration fonctionnelle du dispositif de formage (1), dans laquelle lesdites premières portions avant et arrière de paroi latérale (40, 41) sont sensiblement jointives, de même que lesdites deuxièmes portions avant et arrière de paroi latérale (50, 51), et d'autre part une configuration ouverte, correspondant à ladite configuration de maintenance du dispositif de formage (1), dans laquelle lesdites premières portions avant et arrière de paroi latérale (40, 41) sont écartées l'une de l'autre, de même que lesdites deuxièmes portions avant et arrière de paroi latérale (50, 51), lesdites première et deuxième portions arrière de paroi latérale (41, 51) étant montées mobiles en translation par rapport respectivement auxdites première et deuxième portions avant de paroi latérale (40, 50), pour permettre le passage de l'une desdites configurations fermée et ouverte à l'autre par translation desdites première et deuxième portions arrière de paroi latérale (41, 51) par rapport respectivement auxdites première et deuxième portions avant de paroi latérale (40, 50).

3. Dispositif de formage (1) selon la revendication précédente, **caractérisé en ce que** lesdites première et deuxième portions arrière de paroi latérale (41, 51) sont montées mobiles en translation par rapport respectivement auxdites première et deuxième portions avant de paroi latérale (40, 50) selon une direction (W-W') sensiblement perpendiculaire auxdits premier et deuxième axes (X, X', Y-Y').

4. Dispositif de formage (1) selon l'une quelconque des revendications précédentes, **caractérisé en ce qu'**il comprend un premier organe de commande manuelle (24) mobile ainsi qu'un premier organe de transformation de mouvement (25) qui est relié d'une part audit premier organe de commande manuelle et d'autre part auxdites première et deuxième portions arrière de paroi latérale (41, 51) pour convertir un déplacement, imparti manuellement, dudit premier organe de commande manuelle (24), en déplacements simultanés desdites première et deuxième portions arrière de paroi latérale (41, 51) par rapport respectivement auxdites première et deuxième portions avant de paroi latérale (40, 50).

5. Dispositif de formage (1) selon l'une quelconque des revendications précédentes, **caractérisé en ce que** ledit laminoir comprend un troisième rouleau de laminage (11) qui s'étend longitudinalement, selon un troisième axe (Z-Z'), entre lesdites première et deuxième parois latérales (4, 5), à l'intérieur de la cuve, lesdites première et deuxième portions avant de paroi latérale (40, 50) portant entre elles ledit troisième rouleau de laminage (11) auquel elles sont assemblées pour qu'il fasse ainsi partie dudit sous-ensemble avant, lesdits premier, deuxième et troisième rouleaux de laminage (8, 9, 11) étant agencés pour ménager, en configuration fonctionnelle, un premier entrefer (10) entre lesdits premier et deuxième rouleaux (8, 9), ainsi qu'un deuxième entrefer (12) entre lesdits premier et troisième rouleaux (8, 11), lesdits deuxième et troisième rouleaux (9, 11) étant corotatifs, tandis que lesdits premier et troisième rouleaux (8, 11) sont contrarotatifs, pour faire passer la composition pâteuse d'abord dans le premier entrefer (10) puis dans le deuxième entrefer (12).

6. Dispositif de formage (1) selon l'une quelconque des revendications précédentes, **caractérisé en ce qu'**il comprend au moins un premier système d'assemblage (26) pour assembler ladite première portion avant de paroi latérale (40) audit premier rouleau de laminage (8), ledit premier système d'assemblage établissant une liaison pivot glissant selon ledit premier axe (X, X') entre ledit premier rouleau de laminage (8) et ladite première portion avant de paroi latérale (40).

7. Dispositif de formage (1) selon la revendication précédente **caractérisé en ce que** ladite première portion avant de paroi latérale (40) est montée mobile à translation selon ledit premier axe (X, X') par rapport à ladite deuxième portion avant de paroi latérale (50).

8. Dispositif de formage (1) selon l'une quelconque des revendications 6 et 7 **caractérisé en ce que** ledit premier système d'assemblage inclut un premier tourillon (260) solidaire dudit premier rouleau de laminage (8) ainsi qu'un premier palier (261) solidaire de ladite première portion avant de paroi latérale (40) et qui reçoit ledit premier tourillon (260) pour permettre à ce dernier à la fois de coulisser et de tourner selon ledit premier axe (X, X'), ledit premier tourillon (260) traversant ladite première portion avant de paroi latérale (40) pour saillir à l'extérieur de la cuve, ledit dispositif de formage (1) comprenant un organe de motorisation (36) pourvu d'au moins un premier arbre de sortie rotatif (37) disposé à l'extérieur de la cuve, ainsi qu'un mécanisme d'accouplement débrayable conçu pour évoluer entre d'une part une configuration embrayée dans laquelle ledit mécanisme d'accouplement débrayable accouple lesdits premier arbre de sortie (37) et premier tourillon (260) pour que la rotation dudit premier arbre de sortie (37) entraîne celle dudit premier tourillon (260), et d'autre part une configuration débrayée dans laquelle lesdits premier arbre de sortie (37) et premier tourillon (260) sont désaccouplés pour que la rotation dudit premier arbre de sortie (37) n'entraîne pas celle dudit premier tourillon (260).

9. Dispositif de formage (1) selon l'une quelconque des revendications précédentes, **caractérisé en ce qu'**il comprend au moins un deuxième système d'assemblage (27) pour assembler ladite deuxième portion avant de paroi latérale (50) audit premier rouleau de laminage (8), ledit deuxième système d'assemblage (27) établissant une liaison pivot glissant selon ledit premier axe (X, X') entre ledit premier rouleau de laminage (8) et ladite deuxième portion avant de paroi latérale (50).

10. Dispositif de formage (1) selon la revendication précédente **caractérisé en ce que** ledit deuxième système d'assemblage (27) inclut un deuxième tourillon (270) solidaire dudit premier rouleau de laminage (8) ainsi qu'un deuxième palier (271) solidaire de ladite deuxième portion avant de paroi latérale (50) et qui reçoit ledit deuxième tourillon (270) pour permettre à ce dernier à la fois de coulisser et de tourner selon ledit premier axe (X, X'), ledit deuxième tourillon (270) traversant ladite deuxième portion avant de paroi latérale (50) pour saillir à l'extérieur de la cuve.

11. Dispositif de formage (1) selon la revendication précédente **caractérisé en ce qu'**il comprend un quatrième organe de commande manuelle (38) disposé à l'extérieur de la cuve et relié audit deuxième tourillon (270) pour convertir un déplacement, imparti manuellement, dudit quatrième organe de commande manuelle (38), en rotation dudit premier rouleau de laminage (8) selon ledit premier axe (X, X').

12. Dispositif de formage (1) selon les revendications 6 et 9 **caractérisé en ce qu'**il comprend un système d'entraînement qui est relié d'une part audit premier rouleau (8) et d'autre part à au moins l'une desdites première et deuxième portions avant de paroi latérale (40, 50), pour convertir un déplacement, imparti manuellement, de ladite au moins une desdites première et deuxième portions avant de paroi latérale (40, 50), en translation, selon ledit premier axe (X, X'), dudit premier rouleau de laminage (8).

13. Installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage (1) selon l'une quelconque des revendications précédentes.

14. Procédé de fabrication de pâtes alimentaires destinées à être réchauffées et/ou cuites avant d'être consommées, ledit procédé de fabrication comprenant :
- la réception, dans une cuve, d'une composition pâteuse à partir de laquelle les pâtes alimentaires sont destinées à être formées, ladite cuve comprenant au moins des première et deuxième parois latérales (4, 5) qui se font face,
- le laminage de ladite composition pâteuse, au moyen d'un laminoir comprenant au moins des premier et deuxième rouleaux de laminage (8, 9) qui s'étendent longitudinalement, selon respectivement un premier et un deuxième axe (X, X', Y-Y'), entre lesdites première et deuxième parois latérales (4, 5), à l'intérieur de la cuve, pour forcer la composition pâteuse contenue dans la cuve à travers des buses d'extrusion (2) associées à ladite cuve,
ledit procédé de fabrication étant **caractérisé en ce que** lesdites première et deuxième parois latérales (4, 5) comprennent respectivement des première et deuxième portions avant de paroi latérale (40, 50) qui portent entre elles ledit premier rouleau de laminage (8) auquel elles sont assemblées pour former avec lui un sous-ensemble avant (13), lesdites première et deuxième parois latérales (4, 5) comprenant également respectivement des première et deuxième portions arrière de paroi latérale (41, 51) qui portent entre elles ledit deuxième rouleau de laminage (9) auquel elles sont assemblées pour former avec lui un sous-ensemble arrière (14), ledit procédé de fabrication comprenant une étape de maintenance au cours de laquelle, après avoir arrêté le laminage, lesdits sous-ensembles avant et arrière (13, 14) sont écartés l'un de l'autre.

15. Procédé de fabrication selon la revendication précédente **caractérisé en ce qu'**il comprend une étape préalable de fabrication de ladite composition pâteuse par malaxage et cuisson d'un mélange formé à partir au moins d'une farine et / ou d'une semoule d'au moins une céréale contenant des protéines capables de former du gluten et d'un liquide d'hydratation.

## Patentansprüche

1. Vorrichtung zum Formen (1) von Teigwaren, die dazu bestimmt sind, vor dem Verzehr wiedererwärmt und/oder gekocht zu werden, wobei besagte Vorrichtung zum Formen (1) folgendes umfasst:
- einen Behälter, der dazu eingerichtet ist, eine teigige Zusammensetzung aufzunehmen, aus welcher die Teigwaren geformt werden sollen, wobei besagter Behälter mindestens eine erste und eine zweite Seitenwand (4, 5) umfasst, die einander gegenüberliegen,
- Extrusionsdüsen (2), welche besagtem Behälter zugeordnet sind, um mit der teigigen Zusammensetzung aus besagtem Behälter versorgt zu werden,
- eine Walzvorrichtung, um die in dem Behälter aufgenommene teigige Zusammensetzung durch besagte Extrusionsdüsen (2) zu pressen, wobei besagte Walzvorrichtung mindestens eine erste und eine zweite Walzrolle (8, 9) umfasst, welche sich jeweils longitudinal zwischen besagter erster und zweiter Seitenwand (4, 5) entlang einer ersten beziehungsweise zweiten Achse (X, X', Y-Y') im Inneren des Behälters erstrecken,
wobei besagte Vorrichtung zum Formen (1) **dadurch gekennzeichnet ist, dass** besagte erste und zweite Seitenwände (4, 5) jeweils einen ersten beziehungsweise zweiten vorderen Seitenwandabschnitt (40, 50) aufweisen, welche zwischen sich besagte erste Walzrolle (8) tragen, mit welcher sie zusammengefügt sind, um mit ihr eine vordere Teil-Baugruppe (13) zu formen, wobei besagte erste und zweite Seitenwände (4, 5) außerdem jeweils einen ersten beziehungsweise einen zweiten hinteren Seitenwandabschnitt (41, 51) aufweisen, welche zwischen sich besagte zweite Walzrolle (9) tragen, mit welcher sie zusammengefügt sind, um mit ihr eine hintere Teil-Baugruppe (14) zu formen, wobei besagte vordere Teil-Baugruppe (13) und hintere Teil-Baugruppe (14) relativ zueinander beweglich sind, um der Vorrichtung zum Formen (1) zu ermöglichen, durch ein relatives Auseinanderbewegen besagter vorderer Teil-Baugruppe (13) und hinterer Teil-Baugruppe (14) von einer Betriebskonfiguration zumindest in eine Wartungskonfiguration überzugehen.

2. Vorrichtung zum Formen (1) nach dem vorhergehenden Anspruch, **dadurch gekennzeichnet, dass** besagte erste und zweite Seitenwände (4, 5) dazu eingerichtet sind, sich zwischen einerseits einer geschlossenen Konfiguration, die der Betriebskonfiguration der Vorrichtung zum Formen (1) entspricht und in welcher besagte erste vordere und hintere Seitenwandabschnitte (40, 41), wie ebenso besagte zweite vordere und hintere Seitenwandabschnitte (50, 51), im Wesentlichen aneinandergrenzen, und andererseits einer geöffneten Konfiguration, die der Wartungskonfiguration der Vorrichtung zum Formen (1) entspricht und in welcher besagte erste vordere und hintere Seitenwandabschnitte (40, 41), wie ebenso besagte zweite vordere und hintere Seitenwandabschnitte (50, 51), voneinander beabstandet sind, zu bewegen, wobei besagte erste und zweite hintere Seitenwandabschnitte (41, 51) jeweils relativ zu besagten ersten und zweiten vorderen Seitenwandabschnitten (40, 50) translatorisch beweglich montiert sind, um den Übergang von der einen zur anderen von besagter geschlossener und geöffneter Konfigurationen durch Translation besagter erster und zweiter hinterer Seitenwandabschnitte (41, 51) jeweils relativ zu besagten ersten und zweiten vorderen Seitenwandabschnitten (40, 50) zu ermöglichen.

3. Vorrichtung zum Formen (1) nach dem vorhergehenden Anspruch, **dadurch gekennzeichnet, dass** besagte erste und zweite hintere Seitenwandabschnitte (41, 51) jeweils relativ zu besagten ersten und zweiten vorderen Seitenwandabschnitten (40, 50) in einer Richtung (W-W'), die im Wesentlichen senkrecht zu den ersten und zweiten Achsen (X, X', Y-Y') verläuft, translatorisch beweglich montiert sind.

4. Vorrichtung zum Formen (1) nach einem der vorhergehenden Ansprüche, **dadurch gekennzeichnet, dass** sie ein erstes Element zur manuellen Betätigung (24) sowie ein erstes Bewegungsumwandlungselement (25) umfasst, welches einerseits mit besagtem erstes Element zur manuellen Betätigung und andererseits mit besagten ersten und zweiten hinteren Seitenwandabschnitten (41, 51) verbunden ist, um eine manuell ausgeübte Verschiebung besagten ersten Elements zur manuellen Betätigung (24) umzuwandeln in gleichzeitige Verschiebungen besagter erster und zweiter hinterer Seitenwandabschnitte (41, 51) jeweils relativ zu besagten ersten und zweiten vorderen Seitenwandabschnitten (40, 50).

5. Vorrichtung zur Formen (1) nach einem der vorhergehenden Ansprüche, **dadurch gekennzeichnet, dass** besagte Walzvorrichtung eine dritte Walzrolle (11) umfasst, welche sich longitudinal, entlang einer dritten Achse (Z-Z'), zwischen besagter erster und zweiter Seitenwand (4, 5) im Inneren des Behälters erstreckt, wobei besagte erste und zweite vordere Seitenwandabschnitte (40, 50) besagte dritte Walzrolle (11) zwischen sich tragen, mit welcher sie zusammengefügt sind, um einen Teil der vorderen Teil-Baugruppe zu bilden, und wobei besagte erste, zweite und dritte Walzrolle (8, 9, 11) so angeordnet sind, dass sie in der Betriebskonfiguration einen ersten Spalt (10) zwischen besagter erste und zweiter Walzrolle (8, 9) sowie einen zweiten Spalt (12) zwischen besagter erster und dritter Walzrolle (8, 11) bilden, wobei besagte zweite und die dritte Walzrolle (9, 11) gleichsinnig rotieren, während besagte erste und dritte Walzrolle (8, 11) gegensinnig rotieren, um die teigige Zusammensetzung zunächst durch den ersten Spalt (10) und anschließend durch den zweiten Spalt (12) zu führen.

6. Vorrichtung zum Formen (1) nach einem der vorhergehenden Ansprüche, **dadurch gekennzeichnet, dass** sie mindestens ein erstes Montagesystem (26) zur Montage besagten ersten vorderen Seitenwandabschnitts (40) an besagter erster Walzrolle (8) umfasst, wobei besagtes erstes Montagesystem eine Gleit-Schwenk-Verbindung entlang besagter erster Achse (X, X') zwischen besagter erster Walzrolle (8) und besagtem ersten vorderen Seitenwandabschnitt (40) herstellt.

7. Vorrichtung zum Formen (1) nach dem vorhergehenden Anspruch, **dadurch gekennzeichnet, dass** besagter erster vorderer Seitenwandabschnitt (40) entlang besagter erster Achse (X, X') relativ zu besagtem zweiten vorderen Seitenwandabschnitt (50) translatorisch beweglich montiert ist.

8. Vorrichtung zum Formen (1) nach einem der Ansprüche 6 und 7, **dadurch gekennzeichnet, dass** besagtes erstes Montagesystem einen ersten Zapfen (260), der fest mit besagter erster Walzrolle (8) verbunden ist, und ein erstes Lager (261), das fest mit besagtem ersten vorderen Seitenwandabschnitt (40) verbunden ist und besagten ersten Zapfen (260) aufnimmt, umfasst, um letzterem ermöglichen, gleichzeitig entlang besagter erster Achse (X, X') zu gleiten und zu drehen, wobei besagter erster Zapfen (260) durch besagten ersten vorderen Seitenwandabschnitt (40) hindurchtritt, um aus dem Behälter herauszuragen, wobei besagte Vorrichtung zum Formen (1) ein Antriebselement (36), das mit mindestens einer ersten rotierenden Abtriebswelle (37) ausgestattet ist, die außerhalb des Behälters angeordnet ist, sowie einen auskuppelbaren Kupplungsmechanismus aufweist, der dazu eingerichtet ist, umzuschalten zwischen einerseits einer eingekuppelten Konfiguration, in welcher besagter auskuppelbarer Kupplungsmechanismus besagte erste Abtriebswelle (37) und besagten ersten Zapfen (260) koppelt, sodass die Drehung besagter erster Abtriebswelle (37) jene des besagten ersten Zapfens (260) antreibt, und andererseits einer ausgekuppelten Konfiguration, in welcher besagte erste Abtriebswelle (37) und besagter erster Zapfen (260) entkoppelt sind, sodass die Drehung besagter erster Abtriebswelle (37) jene des besagten ersten Zapfens (260) nicht antreibt.

9. Vorrichtung zum Formen (1) nach einem der vorhergehenden Ansprüche, **dadurch gekennzeichnet, dass** sie mindestens ein zweites Montagesystem (27) zur Montage besagten zweiten vorderen Seitenwandabschnitts (50) an besagter erster Walzrolle (8) umfasst, wobei besagtes zweites Montagesystem (27) eine Gleit-Schwenk-Verbindung entlang besagter erster Achse (X, X') zwischen besagter erster Walzrolle (8) und besagtem zweiten vorderen Seitenwandabschnitt (50) herstellt.

10. Vorrichtung zum Formen (1) nach dem vorhergehenden Anspruch, **dadurch gekennzeichnet, dass** besagtes zweites Montagesystem (27) einen zweiten Zapfen (270), der fest mit besagter erster Walzrolle (8) verbunden ist, sowie ein zweites Lager (271) umfasst, das fest mit besagtem zweiten vorderen Seitenwandabschnitt (50) verbunden ist und besagten zweiten Zapfen (270) aufnimmt, um letzterem zu ermöglichen, gleichzeitig entlang besagter ersten Achse (X, X') zu gleiten und zu drehen, wobei besagter zweite Zapfen (270) durch besagten zweiten vorderen Seitenwandabschnitt (50) hindurchtritt, sodass er aus dem Behälter herausragt.

11. Vorrichtung zum Formen (1) nach dem vorhergehenden Anspruch, **dadurch gekennzeichnet, dass** sie ein viertes Element zur manuellen Betätigung (38) umfasst, welches außerhalb des Behälters angeordnet ist und mit besagtem zweiten Zapfen (270) verbunden ist, um eine manuell ausgeübte Verschiebung des besagten vierten Elements zur manuellen Betätigung (38) in eine Drehung besagter erster Walzrolle (8) um besagte erste Achse (X, X') umzuwandeln.

12. Vorrichtung zum Formen (1) nach den Ansprüchen 6 und 9, **dadurch gekennzeichnet, dass** sie ein Antriebssystem umfasst, das einerseits mit besagter erster Walzrolle (8) und andererseits mit mindestens einem der besagten ersten und zweiten vorderen Seitenwandabschnitte (40, 50) verbunden ist, um eine manuell ausgeübte Verschiebung dieses mindestens einen der besagten ersten und zweiten vorderen Seitenwandabschnitte (40, 50) in eine Translation besagter erster Walzrolle (8) entlang besagter erster Achse (X, X') umzuwandeln.

13. Anlage zur Herstellung von Teigwaren, die dazu bestimmt sind, vor dem Verzehr wiedererwärmt und/oder gekocht zu werden, wobei besagte Anlage mindestens folgendes umfasst:
- eine Station zur Herstellung einer teigigen Zusammensetzung, aus welcher besagte Teigwaren hergestellt werden sollen,
- eine Vorrichtung zum Formen (1) nach einem der vorhergehenden Ansprüche.

14. Verfahren zur Herstellung von Teigwaren, die dazu bestimmt sind, vor dem Verzehr wiedererwärmt und/oder gekocht werden sollen, wobei besagtes Verfahren zur Herstellung folgendes umfasst:
- Aufnehmen einer teigigen Zusammensetzung, aus welcher die Teigwaren geformt werden sollen, in einen Behälter, wobei besagter Behälter mindestens eine erste und eine zweite Seitenwand (4, 5) aufweist, die einander gegenüberliegen,
- Walzen der teigigen Zusammensetzung mittels einer Walzvorrichtung, welche mindestens eine erste und eine zweite Walzrolle (8, 9) umfasst, welche sich jeweils longitudinal entlang einer ersten beziehungsweise zweiten Achse (X, X', Y-Y') zwischen besagter erster und zweiten Seitenwand (4, 5) im Inneren des Behälters erstrecken, um die in den Behälter aufgenommene teigige Zusammensetzung Extrusionsdüsen (2), die besagtem Behälter zugeordnet sind, zu pressen, wobei das Verfahren zur Herstellung **dadurch gekennzeichnet ist, dass** besagte erste und zweite Seitenwände (4, 5) jeweils einen ersten beziehungsweise zweiten vorderen Seitenwandabschnitte (40, 50) aufweisen, welche zwischen sich besagte erste Walzrolle (8) tragen, mit welcher sie zusammengefügt sind, um mit ihr eine vordere Teil-Baugruppe (13) zu bilden, wobei besagte erste und zweite Seitenwände (4, 5) außerdem jeweils einen ersten beziehungsweise zweiten hinteren Seitenwandabschnitt (41, 51) aufweisen, welche zwischen sich besagte zweite Walzrolle (9) tragen, mit welcher sie zusammengefügt sind, um mit ihr eine hintere Teil-Baugruppe (14) zu formen, wobei besagtes Verfahren zur Herstellung einen Wartungsschritt umfasst, in welchem, nach Beendigung des Walzens, besagte vordere und hintere Teil-Baugruppen (13, 14) voneinander weg bewegt werden.

15. Verfahren zur Herstellung nach dem vorhergehenden Anspruch, **dadurch gekennzeichnet, dass** es einen vorbereitenden Schritt der Herstellung der besagter teigartigen Zusammensetzung durch Kneten und Kochen einer Mischung umfasst, die aus mindestens einem Mehl und/oder Grieß mindestens eines Getreides, das zur Bildung von Gluten fähige Proteine enthält, sowie einer Hydratationsflüssigkeit gebildet ist.

## Claims

1. A device (1) for forming pasta intended to be reheated and/or cooked before being consumed, said forming device (1) comprising:
- a tank designed to contain a pasty composition from which pasta is intended to be formed, said tank comprising at least first and second side walls (4, 5) that face each other,
- extrusion nozzles (2) associated with said tank to be supplied with the pasty composition from said tank,
- a rolling mill for forcing the pasty composition contained in the tank through said extrusion nozzles (2), said rolling mill comprising at least first and second rolling rolls (8, 9) that extend longitudinally, along a first and a second axis (X, X', Y-Y'), respectively, between said first and second side walls (4, 5), inside the tank,
said forming device (1) being **characterized in that** said first and second side walls (4, 5) comprise, respectively, first and second front side wall portions (40, 50) that carry therebetween said first rolling roll (8), to which they are assembled to form therewith a front subassembly (13), said first and second side walls (4, 5) also comprising, respectively, first and second rear side wall portions (41, 51) that carry therebetween said second rolling roll (9), to which they are assembled to form therewith a rear subassembly (14), said front (13) and rear (14) subassemblies being movable relative to one another to allow the forming device (1) to transition from an operational configuration to at least one maintenance configuration by relative separation of said front (13) and rear (14) subassemblies.

2. The forming device (1) according to the preceding claim, **characterized in that** said first and second side walls (4, 5) are designed to move between, on the one hand, a closed configuration, corresponding to the operational configuration of the forming device (1), in which said first front and rear side wall portions (40, 41) are substantially joined, as are said second front and rear side wall portions (50, 51), and, on the other hand, an open configuration, corresponding to said maintenance configuration of the forming device (1), in which said first front and rear side wall portions (40, 41) are spaced apart from one another, as are said second front and rear side wall portions (50, 51), said first and second rear side wall portions (41, 51) being movably mounted in translation relative to said first and second front side wall portions (40, 50), respectively, to allow transition from one of said closed and open configurations to the other by translating said first and second rear side wall portions (41, 51) relative to said first and second front side wall portions (40, 50), respectively.

3. The forming device (1) according to the preceding claim, **characterized in that** said first and second rear side wall portions (41, 51) are movably mounted in translation relative to said first and second front side wall portions (40, 50), respectively, in a direction (W-W') substantially perpendicular to said first and second axes (X, X', Y-Y').

4. The forming device (1) according to any one of the preceding claims, **characterized in that** it comprises a movable first manual control member (24) as well as a first motion-converting member (25) that is connected, on the one hand, to said first manual control member and, on the other hand, to said first and second rear side wall portions (41, 51) to convert a manually imparted displacement of said first manual control member (24) into simultaneous displacements of said first and second rear side wall portions (41, 51) relative to said first and second front side wall portions (40, 50), respectively.

5. The forming device (1) according to any one of the preceding claims, **characterized in that** said rolling mill comprises a third rolling roll (11) that extends longitudinally along a third axis (Z-Z') between said first and second side walls (4, 5) inside the tank, said first and second front side wall portions (40, 50) carrying therebetween said third rolling roll (11), to which they are assembled so that it thus forms part of said front subassembly, said first, second, and third rolling rolls (8, 9, 11) being arranged to form, in the operational configuration, a first gap (10) between said first and second rolls (8, 9), as well as a second gap (12) between said first and third rolls (8, 11), said second and third rolls (9, 11) being co-rotating, while said first and third rolls (8, 11) are counter-rotating, to cause the pasty composition to pass first into the first gap (10) and then into the second gap (12).

6. The forming device (1) according to any one of the preceding claims, **characterized in that** it comprises at least one first assembly system (26) for assembling said first front side wall portion (40) to said first rolling roll (8), said first assembly system establishing a sliding pivot connection along said first axis (X, X') between said first rolling roll (8) and said first front side wall portion (40).

7. The forming device (1) according to the preceding claim, **characterized in that** said first front side wall portion (40) is movably mounted in translation along said first axis (X, X') relative to said second front side wall portion (50).

8. The forming device (1) according to any one of claims 6 and 7, **characterized in that** said first assembly system includes a first journal (260) secured to said first rolling roll (8), as well as a first bearing (261) secured to said first front side wall portion (40) and which receives said first journal (260) to allow the latter to both slide and rotate along said first axis (X, X'), said first journal (260) passing through said first front side wall portion (40) to project outside the tank, said forming device (1) comprising a motorization member (36) provided with at least one first rotary output shaft (37) disposed outside the tank, as well as a disengageable coupling mechanism designed to move between, on the one hand, an engaged configuration in which said disengageable coupling mechanism couples said first output shaft (37) and first journal (260) so that rotation of said first output shaft (37) causes that of said first journal (260), and, on the other hand, a disengaged configuration in which said first output shaft (37) and first journal (260) are uncoupled so that rotation of said first output shaft (37) does not cause that of said first journal (260).

9. The forming device (1) according to any one of the preceding claims, **characterized in that** it comprises at least one second assembly system (27) for assembling said second front side wall portion (50) to said first rolling roll (8), said second assembly system (27) establishing a sliding pivot connection along said first axis (X, X') between said first rolling roll (8) and said second front side wall portion (50).

10. The forming device (1) according to the preceding claim, **characterized in that** said second assembly system (27) includes a second journal (270) secured to said first rolling roll (8) as well as a second bearing (271) secured to said second front side wall portion (50) and which receives said second journal (270) to allow the latter to both slide and rotate along said first axis (X, X'), said second journal (270) passing through said second front side wall portion (50) to project outside the tank.

11. The forming device (1) according to the preceding claim, **characterized in that** it comprises a fourth manual control member (38) disposed outside the tank and connected to said second journal (270) to convert a manually imparted displacement of said fourth manual control member (38) into rotation of said first rolling roll (8) along said first axis (X, X').

12. The forming device (1) according to claims 6 and 9, **characterized in that** it comprises a drive system that is connected, on the one hand, to said first roll (8) and, on the other hand, to at least one of said first and second front side wall portions (40, 50), to convert a manually imparted displacement of said at least one of said first and second front side wall portions (40, 50) into translation along said first axis (X, X') of said first rolling roll (8).

13. An installation for manufacturing pasta intended to be reheated and/or cooked before being consumed, said installation including at least:
- one station for manufacturing a pasty composition from which said pasta is intended to be manufactured,
- one forming device (1) according to any one of the preceding claims.

14. A method for manufacturing pasta intended to be reheated and/or cooked before being consumed, said manufacturing method comprising:
- receiving, in a tank, a pasty composition from which pasta is intended to be formed, said tank comprising at least first and second side walls (4, 5) that face each other,
- rolling said pasty composition by means of a rolling mill comprising at least first and second rolling rolls (8, 9) that extend longitudinally, along a first and a second axis (X, X', Y-Y') respectively, between said first and second side walls (4, 5), inside the tank, to force the pasty composition contained in the tank through extrusion nozzles (2) associated with said tank,
said manufacturing method being **characterized in that** said first and second side walls (4, 5) comprise, respectively, first and second front side wall portions (40, 50) that carry therebetween said first rolling roll (8), to which they are assembled to form therewith a front subassembly (13), said first and second side walls (4, 5) also comprising, respectively, first and second rear side wall portions (41, 51) that carry therebetween said second rolling roll (9), to which they are assembled to form therewith a rear subassembly (14), said manufacturing method comprising a maintenance step during which, after stopping the rolling, said front and rear subassemblies (13, 14) are spaced apart from one another.

15. The manufacturing method according to the preceding claim, **characterized in that** it comprises a prior step of manufacturing said pasty composition by kneading and cooking a mixture formed from at least flour and/or semolina of at least one cereal containing proteins capable of forming gluten and a hydration liquid.
